# EUROPEAN PATENT SPECIFICATION

(11) **EP 4 071 368 B1**
(45) Date of publication and mention of the grant of the patent: **10.01.2024**
(21) Application number: 22163553.5
(22) Date of filing: 22.03.2022
(51) Int. Cl.: F15B 13/043, F16K 31/42, F15B 13/04, F15B 13/044

(54) **A METHOD AND VALVE ARRANGEMENT FOR CONTROLLING MOTION OF A SPOOL OF A DIRECTIONAL CONTROL VALVE**
VERFAHREN UND VENTILANORDNUNG ZUR STEUERUNG DER BEWEGUNG EINES SCHIEBERS EINES WEGEVENTILS
PROCÉDÉ ET AGENCEMENT DE VANNE POUR COMMANDER LE MOUVEMENT D'UN TIROIR D'UNE VANNE DE COMMANDE DIRECTIONNELLE

(30) Priority: 31.03.2021 SE 2150413
(43) Date of publication of application: 12.10.2022
(73) Proprietor: Parker Hannifin EMEA S.à.r.l., 1163 Etoy (CH)
(72) Inventor: MÅRLIND, Marcus, 412 75 Göteborg (SE)
(74) Representative: Zacco Sweden AB

(56) References cited:
- JP-A- S5 842 805
- US-A1- 2011 030 816
- US-A1- 2019 128 290

## Description

### TECHNICAL FIELD

The present invention relates to a method for accelerating return motion of a main spool of a hydraulic directional control valve towards a spring-biased neutral position of the main spool, and a corresponding hydraulic valve arrangement.

The method and valve arrangement according to the invention can be arranged in any type of hydraulic systems having a hydraulic actuator, in particular but not restricted to mobile hydraulic systems. Moreover, even if the method and valve arrangement according to the invention will be described primarily in relation to a working vehicle, the method and arrangement are not restricted to this particular vehicle, but may as well be installed or implemented in another type of machines vehicles, such as mining vehicles, agriculture vehicles, etc., or stationary hydraulic equipment.

### BACKGROUND

In the field of hydraulic apparatus for operating for example a hydraulic actuator, there is demand for improved responsiveness of the hydraulic system. Improved responsiveness in a hydraulic system may for example result in reduced time period from receiving a signal input until operation of an associated hydraulic actuator changes its operating setting. Such increased responsiveness may for example enable improved safety in safety critical systems, such as in steer-by-wire, or reduce wear of tools powered by the hydraulic system, and/or improved control stability the hydraulic system has less internal delay time.

A valve arrangement according to the preamble of claim 11 is known from JP S58 42805 A.

### SUMMARY

Historically the main bottlenecks for the hydraulic direction control valves has been the response time to quickly position the valves spool to a desired position. The reason why this is the case has mostly been the ability to move a certain amount of mass that is affected by flow forces and oil viscosity at different temperature. But also the fact that the pilot valves have not been fast enough, since they are built on the same principle as the main spool in the valve, the main difference is that pilot valves are smaller.

To make the valves perform faster and thus increase the performance on the load it is connected to, is would be considered quite valuable.

Making the closing window faster would allow for quicker stops of functions in safety critical systems, such as in steer-by-wire. It would also be beneficial in systems where you would need to have high precision on the valves stopping function, such as in harvester heads where it is critical to hit a small cutting-window. Other examples are in the mining industries where hydraulic drills or hammers needs to stop quicker to reduce wear of the drilling equipment.

The main idea of this new valve function is to increase acceleration and speed of the main spool of the valve when the main spool in controlled to go from a first position to a second, less actuated, position, i.e. a position that is located closer to the neutral position than the first position. This can be achieved by counter control the pilot pressure of spool at the same time as the opposite pilot pressure is released to tank. This will make the effect of "kicking" the valve when it is returning and thereby reducing the closing time.

Given the right amount of counter pilot pressure under a certain time interval the time response of the spool returning to neutral position can be significantly reduced.

An object of the present invention is to provide a method and apparatus for controlling the motion of a main spool of a hydraulic directional control valve for providing improved responsiveness, in particular in connection with motion of the main spool from an actuated position to a less actuated position, in particular when the main spool goes from an actuated position to its neutral and/or closing position. This object is at least partly achieved by the features of the independent claims.

According to a first aspect of the present invention, there is provided a method for accelerating return motion of a main spool of a hydraulic directional control valve towards a spring-biased neutral position of the main spool, the method comprising reducing or stopping a control pressure or control force acting on a first longitudinal end of the main spool, and substantially simultaneously applying a short-term counter-pressure or counter-force acting on a second longitudinal end of the main spool for providing an accelerated return motion of the main spool towards the spring-biased neutral position of the main spool.

According to a second aspect of the present invention, there is provided a hydraulic valve arrangement comprising: a hydraulic directional control valve having a main spool; and an electronic control system configured for controlling motion and/or position of the main spool; wherein the electronic control system is configured for reducing or stopping a control pressure or control force acting on a first longitudinal end of the main spool, and substantially simultaneously applying a short-term counter-pressure or counter-force acting on a second longitudinal end of the main spool for providing an accelerated return motion of the main spool towards the spring-biased neutral position of the main spool.

In this way, return motion of the main spool towards a less actuated position may be performed significantly faster compared with a conventional directional control valve that relies merely on spring force for moving the main spool towards the less actuated state.

Further advantages are achieved by implementing one or several of the features of the dependent claims.

In some example embodiments, the counter-pressure or counter-force acting on the second longitudinal end of the main spool, for providing the accelerated return motion of the main spool towards the spring-biased neutral position of the main spool, is applied over a time period of 2 - 500 milliseconds, specifically 5 - 100 milliseconds and more specifically 5 - 50 milliseconds. This is a reasonable definition of the expression "short-term".

In some example embodiments, the method is suitable for accelerating return motion of a main spool of a pilot-operated solenoid-controlled hydraulic directional control valve, or for accelerating return motion of a main spool of a solenoid-operated hydraulic directional control valve, and the method comprises controlling a first solenoid to reduce or stop pilot pressure or force acting on a first longitudinal end of the main spool, and controlling a second solenoid to substantially simultaneously providing a short-term increase of pilot pressure or force acting on a second longitudinal end of the main spool for providing the accelerated return motion of the main spool towards the spring-biased neutral position of the main spool. The task of providing a short-term counter-pressure or counter-force acting on a second longitudinal end of the main spool for providing an accelerated return motion of the main spool towards the neutral position is relatively easily implemented using an electronically controlled solenoid due to the solenoids quick response time accurate motion control, thereby enabling provision of a short and well-timed counter-pressure or counter-force.

In some example embodiments, motion of the main spool in a first actuation direction from the spring-biased neutral position is controlled either indirectly by the first solenoid acting on a pilot spool of a pilot valve that controls a pilot fluid pressure that acts on the first longitudinal end of the main spool, or by the first solenoid acting directly on the first longitudinal end of the main spool, and return motion of the main spool in a second actuation direction from an actuated position towards the spring-biased neutral position is controlled partly by a return spring arrangement and partly either indirectly by the second solenoid acting on a pilot spool of a pilot valve that controls a pilot fluid pressure that acts on the second longitudinal end of the main spool or by the second solenoid acting directly on the second longitudinal end of the main spool. Hence, return force acting on the main spool is provided by both the return spring arrangement and the second solenoid, directly or via pilot pressure.

In some example embodiments, the short-term increase of pilot pressure or force acting on a second longitudinal end of the main spool is provided by temporarily energizing, or temporarily increasing an energizing level of, the second solenoid, over a time period of 2 - 500 milliseconds, specifically 5 - 100 milliseconds and more specifically 5 - 50 milliseconds. Depending on factors, such as size, weight and dimensions of the directional control valve, desired spool travel of the main spool time, fluid viscosity, etc., the time period may vary to a certain extent for fulfilling the purpose of providing an accelerated return motion of the main spool.

In some example embodiments, the short-term increase of pilot pressure or force acting on a second longitudinal end of the main spool is provided by supplying a current pulse through a coil of the second solenoid, wherein the current pulse has a rise time in the range of 2 - 250 milliseconds, specifically 5 - 75 milliseconds and more specifically 5 - 25 milliseconds. For the purpose of effective accelerated return motion of the main spool, the current pulse may have a fairly steep leading edge for quickly reaching an effective current level that may significantly reduce the time for return motion of the main spool.

In some example embodiments, the hydraulic directional control valve comprises a valve housing with at least a first fluid port, a second fluid port and a bore for enabling slidable motion of the main spool between at least the spring biased neutral position and a first actuated position, wherein motion of the main spool between the spring biased neutral position and the first actuated position controls a flow path extending through the hydraulic directional control valve between the first and second fluid ports.

In some example embodiments, the method comprises an initial step of obtaining instructions for shifting the main spool from a first actuated position to a second less actuated position, in particular from highly actuated position to a lightly actuated operation position or to a neutral position, and in response thereto performing said step of reducing or stopping a control pressure or control force acting on a first longitudinal end of the main spool, and substantially simultaneously applying a short-term counter-pressure or counter-force acting on a second longitudinal end of the main spool for providing an accelerated return motion of the main spool towards the spring-biased neutral position of the main spool.

The step of obtaining instructions for shifting the main spool from a first actuated position to a second less actuated position may be deemed equivalent with obtaining input information that satisfies one or more conditions of the control system required for initiating said shifting of the main spool from a first actuated position to a second less actuated position. The input information may for example correspond to data obtained from one or more input devices, such as sensors or detectors, or data from other parts/controllers of the electronic control system, or from an internal timer within a control unit, or the like.

In some example embodiments, the method comprises an initial step of obtaining instructions for shifting the main spool from a first actuated position to a second less actuated position, in particular from highly actuated position to a lightly actuated operation position or to a neutral position, and in response thereto controlling the first solenoid to reduce pilot pressure or force acting on a first longitudinal end of the main spool, and controlling the second solenoid to substantially simultaneously providing a short-term increase of pilot pressure or force acting on a second longitudinal end of the main spool for providing an accelerated return motion of the main spool towards a spring-biased neutral position of the main spool.

In some example embodiments, the method comprises a prior step of: obtaining information indicating the current actuating position of the main spool, and controlling the second solenoid for setting the pilot spool of the second pilot valve in a pre-energized state when the current actuating position of the main spool highly actuated operating position. Thereby, a faster response may be provided by the second pilot valve, thereby reducing the time period for performing the return motion of the main spool.

In some example embodiments, the step of setting the pilot spool of the second pilot valve in a pre-energized state corresponds to energizing the second solenoid for substantially or completely overcoming any initial dead area, in which increased energization does not result in increased control pressure from the second pilot valve. Thereby, a faster response may be provided by the second pilot valve, thereby reducing the time period for performing the return motion of the main spool.

In some example embodiments, the step of controlling the second solenoid to substantially simultaneously providing a short-term increase of pilot pressure or force acting on a second longitudinal end of the main spool involves energizing the second solenoid using a voltage or current pulse having predetermined voltage or current level, duration and shape. By having a one or more predetermined voltage or current pulses stored for example a lookup table a cost-effective and easily implemented solution is provided.

In some example embodiments, the step of controlling the second solenoid to substantially simultaneously providing a short-term increase of pilot pressure or force acting on a second longitudinal end of the main spool involves monitoring current position of main spool, and energizing the second solenoid using a feedback controller that takes at least current position of main spool into account. Control of the second solenoid based in main spool position feedback enables a more accurate and adaptable energization of the second solenoid.

In some example embodiments, the hydraulic directional control valve is a pilot-operated hydraulic directional control valve that is connected to and controlled by a solenoid-operated pilot valve arrangement having first and second solenoids; or the hydraulic directional control valve is a solenoid-operated hydraulic directional control valve having first and second direct-acting solenoids, and the electronic control system is operatively connected to the first and second solenoids and configured for controlling the first solenoid to reduce pilot pressure or force acting on a first longitudinal end of the main spool, and for controlling the second solenoid to substantially simultaneously providing a short-term increase of pilot pressure or force acting on a second longitudinal end of the main spool for providing an accelerated return motion of the main spool towards a spring-biased neutral position of the main spool.

In some example embodiments, motion of the main spool in a first actuation direction from the spring-biased neutral position is configured to be controlled either indirectly by the first solenoid acting on a pilot spool of a pilot valve that controls a pilot fluid pressure that acts on the first longitudinal end of the main spool, or by the first solenoid acting directly on the first longitudinal end of the main spool, and return motion of the main spool in a second actuation direction from an actuated position towards the spring-biased neutral position is configured to be controlled by a return spring arrangement and either indirectly by the second solenoid acting on a pilot spool of a pilot valve that controls a pilot fluid pressure that acts on the second longitudinal end of the main spool, or by the second solenoid acting directly on the second longitudinal end of the main spool.

In some example embodiments, the pilot valve arrangement includes a separate first pilot valve and a separate second pilot valve, wherein each of the first and second solenoids are operatively connected to the pilot-operated hydraulic directional control valve; motion of the main spool in a first actuation direction from the spring-biased neutral position is configured to be controlled by the first solenoid acting on a pilot spool of a first pilot valve that controls a pilot fluid pressure that acts on the first longitudinal end of the main spool, and a return motion of the main spool in a second actuation direction from an actuated position towards the spring-biased neutral position is configured to be controlled by a return spring arrangement and by the second solenoid acting on a pilot spool of a second pilot valve that controls a pilot fluid pressure that acts on the second longitudinal end of the main spool.

In some example embodiments, the hydraulic directional control valve further comprises a valve housing with at least a first fluid port, a second fluid port and a bore for enabling slidable motion of the main spool between at least the spring biased neutral position and a first actuated position, wherein motion of the main spool between the spring biased neutral position and the first actuated position controls a flow path extending through the hydraulic directional control valve between the first and second fluid ports.

Further features and advantages of the invention will become apparent when studying the appended claims and the following description. The skilled person in the art realizes that different features of the present disclosure may be combined to create embodiments other than those explicitly described hereinabove and below, without departing from the scope of the present invention as defined in the claims.

### BRIEF DESCRIPTION OF DRAWINGS

The hydraulic valve arrangement and method according to the invention will be described in detail in the following, with reference to the attached drawings, in which
- Fig. 1: shows schematically a side-view of a working machine that may benefit from the hydraulic valve arrangement and method according to the invention,
- Fig. 2-4: show schematically various example embodiments of the hydraulic valve arrangement,
- Fig. 5: shows schematically a more detailed layout of the hydraulic valve arrangement of figure 2,
- Fig. 6: shows the basic steps of the method according to the invention,

- Fig. 7A-9A: show a more detailed example embodiment of the hydraulic valve arrangement in three operating states,
- Fig. 7B-9B: show the actuation forces affecting the main spool in said three operating states,
- Fig. 10: shows data of some parameters over time when implementing the hydraulic valve arrangement and method according to the invention,

- Fig. 11: shows data of some parameters over time without said implementation,
- Fig. 12: shows a magnification of the current pulse of figure 10,
- Fig. 13: shows a current pulse according to an alternative implementation hydraulic valve arrangement and method according to the invention

- Fig. 14: shows a typical behaviour of a solenoid pilot valve,
- Fig. 15: shows the basic steps of a further example embodiment of the method according to the invention,
- Fig. 16: shows a direct-acting solenoid-controlled directional control valve,
- Fig. 17: shows a further example embodiment of the hydraulic valve arrangement according to the invention, and
- Fig. 18: shows a schematic view of an example embodiment of the electronic control system and computing device.

### DESCRIPTION OF EXAMPLE EMBODIMENTS

Various aspects of the invention will hereinafter be described in conjunction with the appended drawings to illustrate and not to limit the invention, wherein like designations denote like elements, and variations of the described aspects are not restricted to the specifically shown embodiments, but are applicable on other variations of the invention within the scope of the claims.

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs).

The invention concerns a method and apparatus for controlling the motion of a main spool of a hydraulic directional control valve for providing improved responsiveness, in connection with motion of the main spool from an actuated position to a neutral position. Improved responsiveness in this context refers to swift displacement of the main spool to a new position in response to a change in target position of said main spool, i.e. short time delay between receiving instructions for moving the main spool to a certain new position until the main spool has actually reached said new position.

Such improved responsiveness bring about many different beneficial aspects in the field of hydraulic systems, such as improved safety in safety critical systems, such as steer-by-wire, due to the shorter response time in case of dangerous driving situation or malfunction of a safety-critical driving system. Moreover, faster response performance may results in reduced wear by means of quicker stops of drilling equipment in hydraulic drills or hammers.

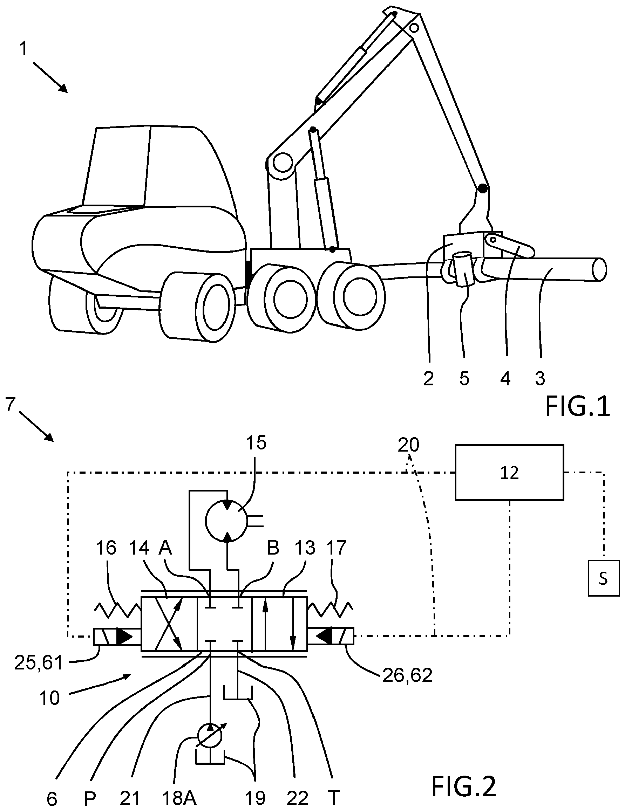

A further non-limiting example where faster valve motion may be used is illustrated in figure 1, which schematically shows a harvester 1 with a harvester head 2 for cutting down trees 3. Such a harvester head 2 may have a saw blade 4 and wheels 5 for pushing the log through the head 2. In such an implementation is typically desirable for accomplishing high productivity to hit a small cutting-window, i.e. to quickly stop feeding of the log upon detecting that a measured feeding length has reached a predetermined threshold value, and to cut the tree log 3 at this position using the saw blade 4. A slow response of the hydraulic valve controlling the hydraulic motor powering the feeding wheels of the harvester head may result in that the tree log is too long, or that tree log must be repositioned before cutting, or the control system must be given additional complexity for compensating the slow response of the hydraulic valve.

Figure 2 schematically shows an example embodiment of a hydraulic valve arrangement 7 that may be arranged for solving the problem of improved responsiveness.

The hydraulic valve arrangement 7 is here illustrated installed in a hydraulic arrangement comprising a hydraulic directional control valve 10 having a main spool, and an electronic control system 12 configured for controlling motion and/or position of the main spool. Moreover, the electronic control system 12 may be configured for reducing or stopping a control pressure or control force acting on a first longitudinal end of the main spool, and substantially simultaneously applying a short-term counter-pressure or counter-force acting on a second longitudinal end of the main spool for providing an accelerated return motion of the main spool towards the spring-biased neutral position of the main spool.

The terms first and second longitudinal ends 59, 60 of the main spool 50 refers herein to first and second end regions of said main spool 50, i.e. not only the outermost longitudinally facing end surface of the main spool 50 but including also for example a longitudinally facing end surface being positioned slightly displaced from the outer end, such as for example on an external shoulder or internal recess of the main spool 50.

The hydraulic directional control valve 10 is here, in a non-limiting example, schematically illustrated in form of 4/3 valve i.e. a four-way three-position valve. Four way means it has four pipe connections, such as for example pressure port P, return port T, port A and port B. The three positions means that the main spool within the valve has three main positions: a centre/neutral position 6, which in the example of figure 2 is a closed centre position 6 having pump port P and return port T disconnected from port A and port B; a first actuation position 13 in which pump port P is fluidly connected with port A and return port T is fluidly connected with port B; and a second actuation position in which pump port P is fluidly connected with port B and the return port T is fluidly connected with port A.

Displacement of the main spool towards the left or right, i.e. in opposite longitudinal directions of the main spool, thus sets the valve in the first and second actuation positions and provides different flow paths between the ports P,T,A,B of the directional control valve 10, thereby enabling different operations of a hydraulic consumer 15 that is connected to port A and port B.

In the example of figure 2, the hydraulic consumer 15 is depicted as a hydraulic two-way motor, such as the hydraulic motor driving the wheel 5 of the harvester head 2, and by actuating the valve 10 for positioning the main spool in the left or right actuated position, the hydraulic motor 15 may be controlled to rotate selectively in a first or second rotational direction, thereby providing control of a feeding length of the log.

The directional control valve of figure 2 is spring-biased to a neutral centre position 6 by means of first and second axial springs 16, 17 that urge the main spool to return to the centre position 6 when no other axial force is applied to the main spool. However, depending on the specific valve layout and implementation, many alternative designs of a return spring arrangement that urge the main spool to return to the neutral position 6 may be used. For example, the directional control valve may be spring-biased to the neutral position 6 by means of a single or plurality of axial spring(s) located on one side of the main spool.

Moreover, the directional control valve of figure 2 is proportional solenoid-controlled and pilot-operated valve, meaning that first and second pilot valves 25, 26 control a pilot pressure that is supplied to the first and second axial ends of the main spool, and that the pilot valves 25, 26 themselves are solenoid controlled, i.e. a first solenoid 61 controls actuation position of a pilot spool of the first pilot valve 25, and a second solenoid 62 controls actuation position of a pilot spool of the second pilot valve 26. The first and second solenoids 61, 62 may be DC or AC solenoids and that may be controlled by the electronic control system 12 via wire or wire-less communication lines 20.

The term pilot valve herein refers to a pressure control valve.

The expression "short-term" used in the sentence "substantially simultaneously applying a short-term counter-pressure or counter-force acting on a second longitudinal end of the main spool for providing an accelerated return motion of the main spool towards the spring-biased neutral position of the main spool" may herein in some example embodiments refer to a time period of 2 - 500 milliseconds, specifically 5 - 100 milliseconds and more specifically 5-50 milliseconds.

The hydraulic arrangement 7 also includes a source 18A of pressurized hydraulic fluid, such as a hydraulic pump, for being operational, and typically also a reservoir 19 of hydraulic fluid generally referred to as tank. A first hydraulic fluid piping arrangement 21 is provided for enabling fluid communication between the pump 18A and pump port P of the valve 10, and a second hydraulic fluid piping arrangement 22 is provided for enabling fluid communication between the return port T and the tank 19. These first and/or second hydraulic fluid piping arrangement 21, 22 may include merely a single pipe, as schematically illustrated in figure 2, but may alternatively include additional intermediate components, such as pressure compensation valves, etc.

The electronic control system 12 typically includes a computing device, such as one or more data processors, a data storage system for storing instructions that are configured to be executed by the computing device, and input/output devices for receiving sensor data from one or more external sensors S and controlling external actuators and devices. The electronic control system 12 is typically installed locally on the hydraulic machine/apparatus and may be include a single centralised computing device or a plurality of computing devices that are interconnected by a data communication net, such as a data bus or the like.

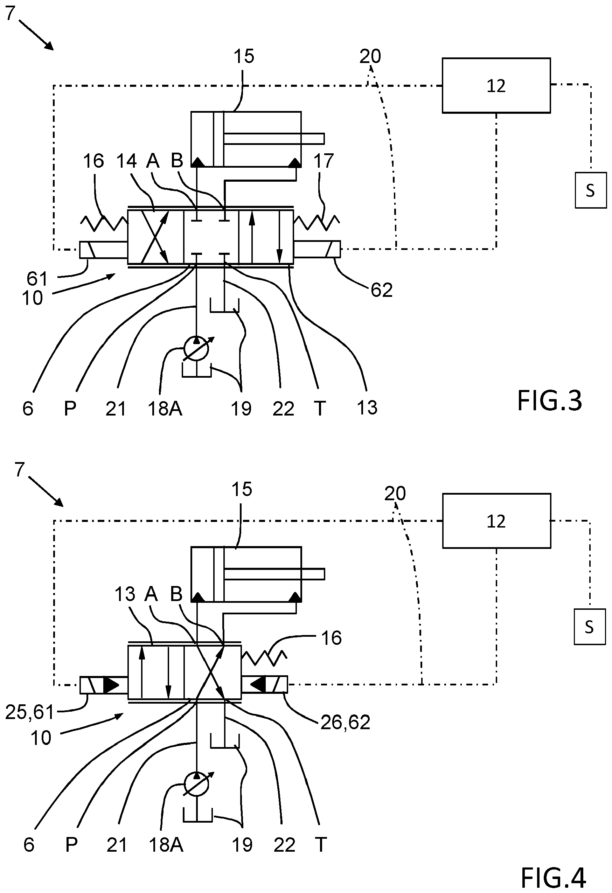

With reference to figure 3, the solution for providing accelerated return motion of the main spool of the hydraulic directional control valve is not limited to the pilot operated directional control valve, as illustrated in figure 2, but may alternatively also be implemented in direct controlled directional control valves. A direct controlled directional control valve has a first solenoid 61 acting directly on a first axial end of the main spool for shifting the directional control valve 10 to a first actuation position, and a second solenoid 62 acting directly on a second axial end of the main spool for shifting the directional control valve 10 to a second actuation position. A further aspect that is differing is the hydraulic consumer, which here is depicted as a hydraulic actuator, in particular as a two-way hydraulic cylinder, that for example, but not restricted to, may be used for steer-by-wire solutions, or the like. The other features of the hydraulic system of figure 3 is similar to the system of figure 2 and reference is made to figure 2 and associated description for further disclosure about figure 3.

As mentioned above, the method and system for providing accelerated return motion of the main spool of the hydraulic directional control valve is not limited to a four-way three-position valve but may alternative be implemented in various other types of valves having a main spool that is displaceable in first and second, opposite, longitudinal directions by means of a control pressure or a control force acting on a first and second longitudinal end of the main spool, respectively, for enabling provision of short-term counter-pressure or counter-force acting on a second longitudinal end of the main spool for providing an accelerated return motion of the main spool towards the spring-biased neutral position of the main spool. For example, the directional control valve may be a two-position, three-position, four-position, five-position or more position valve. Moreover, any of said valve arrangements may be implemented with any of two-way, three-way, four-way, five-way, six-way arrangement, or more.

For example, figure 4 shows schematically an implementation of the method and system in a four-way two-position solenoid-controlled pilot-operated valve, having a neutral position 6 and a first actuated position 13. In the example of figure 4, in the neutral position 6 the pump port P is fluidly connected with port B and the return port T is fluidly connected with port A, and in the first actuated position 13 the pump port P is fluidly connected with port A and return port T is fluidly connected with port B.

Displacement of the main spool towards from the neutral position 6 to the first actuated position 13 thus provides different flow paths between the ports P,T,A,B of the directional control valve 10, thereby enabling different operations of a hydraulic consumer 15 that is connected to port A and port B.

The directional control valve of figure 4 is spring-biased to a neutral centre position by means of first axial spring 16 that urge the main spool to return to the centre position when no other axial force is applied to the main spool.

A first solenoid 25 controls actuation position of a pilot spool of the first pilot valve 25, and a second solenoid 62 controls actuation position of a pilot spool of the second pilot valve 26.

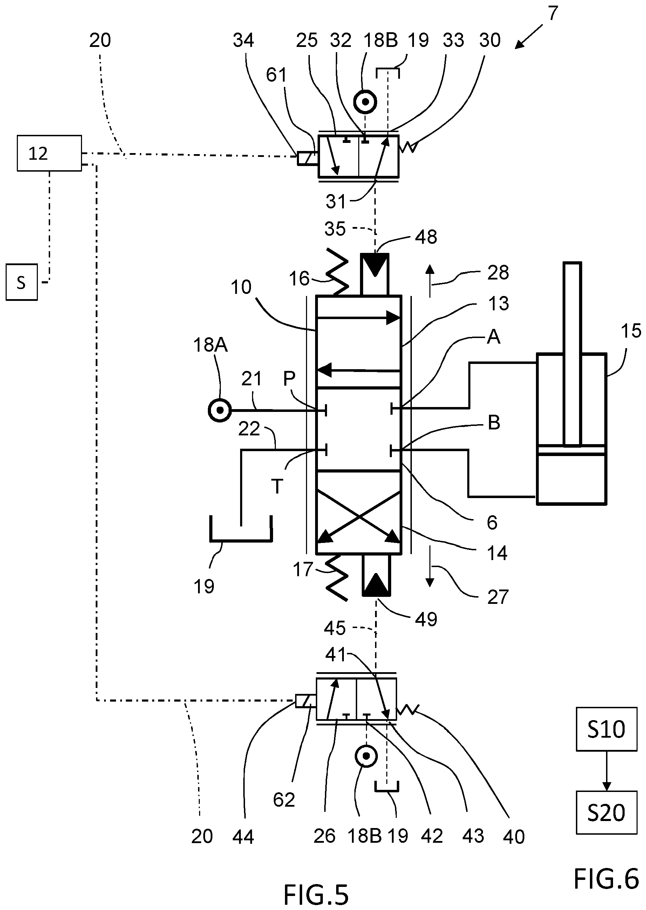

Figure 5 shows an example of a solenoid-controlled pilot-operated hydraulic directional control valve similar to that of figure 2 but a little bit more in detail, specifically with the pilot valves depicted separately. The hydraulic arrangement 7 comprises the solenoid-controlled pilot-operated proportional directional control valve 10 having the main spool (not shown), which is displaceable in a first and a second axial direction 27, 28 for controlling direction of supply and discharge of hydraulic fluid to and from the hydraulic actuator 15, as described above with reference to figure 2.

The first pilot valve 25, which may be referred to as proportional electro-hydraulic control valve, is configured for supplying a pilot pressure to a first axial end of the main spool for displacing the main spool in the first direction 27. Similarly, the second pilot valve 26, which may be referred to as proportional electro-hydraulic control valve, is configured for supplying a pilot pressure to a second axial end of the main spool for displacing the main spool in the second direction 28.

In this example embodiment of the first and second pilot valves 25, 26, the first pilot valve 25 has an outlet port 31 fluidly connected to a first pilot pressure port 48 of the directional control valve 10 for controlling displacement of the main spool in the first axial direction 27, and the second pilot valve 26 has an outlet port 41 fluidly connected to the second pilot pressure port 49 the directional control valve 10 for controlling displacement of the main spool in the second axial direction 28.

Each of the first and second pilot valves 25, 26 further has fluid inlet port 32, 42 connected to a pressurized pilot fluid source 18B that may be a dedicated pilot fluid supply source or a conventional high-pressure pump fluidly connected to the first and second pilot valves 25, 26 via a pressure reducing valve for reducing the pressure of supplied pilot fluid.

Each of the first and second pilot valves 25, 26 further has a discharge port 33, 43 fluidly connected to a tank 19, and an electrical control signal port 34, 44 for receiving electrical control signals from the electronic control system 12.

Each of the first and second pilot valves 25, 26 may be proportional solenoid operated control valves, wherein first and second solenoids 61, 62 control the motion and position the pilot spools of the first and second pilot valves 25, 26. Specifically, the pilot spool in each of said first and second pilot valves 25, 26 is controlled by a solenoid that has a electromagnetically inductive coil wound around for example a movable magnetic member referred to as the core or plunger 57, 58, which is connected to or abutting the pilot spool for transferring a mechanical to force to the pilot spool and thus to move said pilot spool against a return force provided by a return spring 30, 40.

Proportional operated pilot valves 25, 26 means that output force of the solenoids is substantially proportional to the input current that is applied to the coil current, at least over a substantial portion of the operating range of the pilot valves.

In operation, energization of the first or second solenoids 61, 62 of the first or second pilot valves 25, 26, respectively, results in displacement of the pilot spool, such that a fluid passage opens between the fluid inlet port 32, 42 and the fluid outlet port 31, 41. Thereby, pilot pressure is supplied to the end of the main spool via a first and second pilot line 35, 45, respectively.

The actuation level of the solenoids may be controlled by the electronic control system 12 in a closed loop approach by detecting current pilot pressure by a sensor and regulating the actuation level of the solenoid for providing said target pilot pressure, i.e. by continuously adjusting the actuation level of the pilot spool for accomplishing the desired pilot pressure. Alternatively, the actuation level of the solenoids may be controlled by the electronic control system 12 in a closed loop approach by detecting for example position of the main spool by a spool position sensor 76 and regulating the actuation level of the solenoid for providing said target position, i.e. by continuously adjusting the actuation level of the pilot spool for accomplishing the desired main spool position. The spool position sensor 76 may for example detect the displacement position of pin 79 that is fixed to, and moves with, the main spool 50.

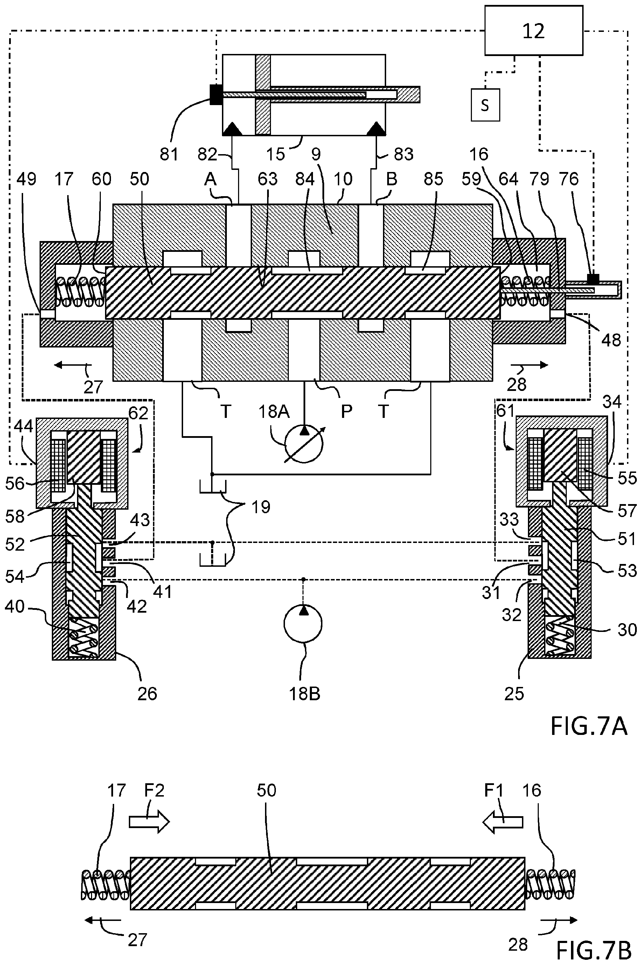

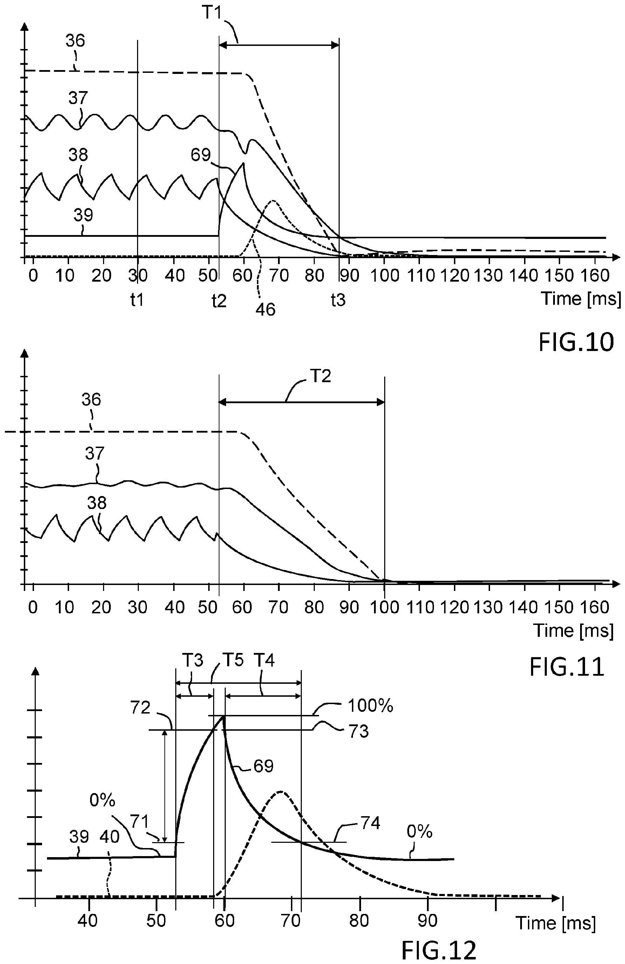

An example embodiment of the basic steps of the method for accelerating return motion of a main spool of a hydraulic directional control valve towards a spring-biased neutral position of the main spool will hereinafter be described with reference to figure 6-10, wherein figure 6 schematically shows to basic steps of the method, figure 7A-7B, 8A-8B and 9A-9B shows an example embodiment of a hydraulic valve arrangement and associated main spool position in a first, second and third operating state, respectively, and figure 10 shows status of some relevant operating parameters over time during said return from the highly actuated position of the main spool to the neutral state, in particular main spool actuation position 36, pilot pressure 37 supplied by first pilot valve, current level 38 supplied to first solenoid, pilot pressure 46 (temporary counter pressure) supplied by second pilot valve and temporary increased current level 39 supplied to second solenoid.

With reference to figure 6, the method comprises a first step S10 of obtaining input information relevant for determining when to reduce or stop an ongoing operation of the hydraulic consumer that is connected to and controlled by the directional control valve 10, and a second step S20 of reducing or stopping a control pressure or control force acting on a first longitudinal end of the main spool, and substantially simultaneously applying a short-term counter-pressure or counter-force acting on a second longitudinal end of the main spool for providing an accelerated return motion of the main spool towards the spring-biased neutral position of the main spool.

The input information may for example be obtained from one or more input devices S, such as sensors or detectors, such as sensors 81 associated with the hydraulic consumer 15, or input information from other parts/controllers of the electronic control system 12, or from an internal timer within a control unit.

The hydraulic valve arrangement showed in three different operating states in figures 7A-7B, 8A-8B and 9A-9B corresponds essentially to the hydraulic valve arrangement showed in and described with reference to figures 2 and 5, but in a more physical layout, such the actuation position of the main spool 50 of the directional control valve 10 is showed, as well as the actuation positions of the pilot spools of the first and second solenoid pilot valves 25, 26.

Specifically, the operating state depicted in figures 7A-7B corresponds to a neutral position of the hydraulic valve arrangement, with the first and second pilot valves in a neutral operating state and the main spool 50 being in a spring-biased neutral state in the centre of the valve housing. In this example embodiment, neutral state of the first and second pilot valves means that the solenoids/coils 55, 56 are non-energized and the return spring 30, 40 pushes the pilot spool 51, 52 towards a non-actuated position. In this operating state, the pilot pressure of the first and second pilot valves 25, 26 corresponds to about tank pressure, i.e. about ambient pressure or slightly above, because the pilot valves 25, 26 may be configured for providing a flow path from the discharge port 33, 43 to the outlet port 31, 41 in the neutral state, while the inlet port 32, 42 is blocked by the pilot spool 51, 52. Said flow path being provided for example by means of a recess 53, 54 formed in the pilot spool 51, 52.

Moreover, with reference to figure 7B that shows the forces acting on the main spool 50, the neutral state of the main spool 50 means that the main spool 50 is in a position in which the spring force F1 from the first spring 46 acting for pushing the main spool 50 towards a first direction 27 is equal to the spring force F2 of the second spring 17 acting for pushing the main spool 50 towards the second direction 28. In this operating state, the tank and pump pumps T, P are disconnected from the A and B ports in the example embodiment of the directional control valve 10 showed in figures 7A-9A.

Consequently, the hydraulic valve arrangement according to the example embodiment of figures 7A-9A comprises a hydraulic directional control valve 10 having a main spool 50 and an electronic control system 12 configured for controlling motion and/or position of the main spool 50. Specifically, the hydraulic directional control valve 10 is a pilot-operated hydraulic directional control valve that is connected to and controlled by a solenoid-operated pilot valve arrangement having first and second solenoids 61, 62, wherein the electronic control system is operatively connected to the first and second solenoids 61, 62 for controlling the pilot pressure supplied to the pilot-operated hydraulic directional control valve 10.

More in detail, the pilot valve arrangement includes a separate first pilot valve 25 and a separate second pilot valve 26, wherein each of the first and second solenoids 61, 62 are operatively connected to the pilot-operated hydraulic directional control valve 10. Motion of the main spool 50 in a first actuation direction 27 from the spring-biased neutral position is configured to be controlled by the first solenoid 61 acting on a pilot spool 51 of the first pilot valve 25 that controls a pilot fluid pressure that acts on the first longitudinal end 59 of the main spool 50, and a return motion of the main spool 50 in a second actuation direction 28 from an actuated position towards the spring-biased neutral position is configured to be controlled by a return spring 17.

The hydraulic directional control valve 10 further comprises a valve housing 9 with at least a first fluid port, such as the pump port P, a second fluid port, such as the A port, and a bore 63 for enabling slidable motion of the main spool 12 between at least the spring biased neutral position and a first actuated position, wherein motion of the main spool 12 between the spring biased neutral position and the first actuated position controls a flow path, in particular shifts the flow path from closed to open, or vice versa, extending through the hydraulic directional control valve 10 between the first and second fluid ports P, A.

Fluid port A in figure 7A is fluidly connected to first port of the hydraulic consumer 15 via a first fluid line 82, and fluid port B is fluidly connected to a second port of the hydraulic consumer 15 via a second fluid line 83.

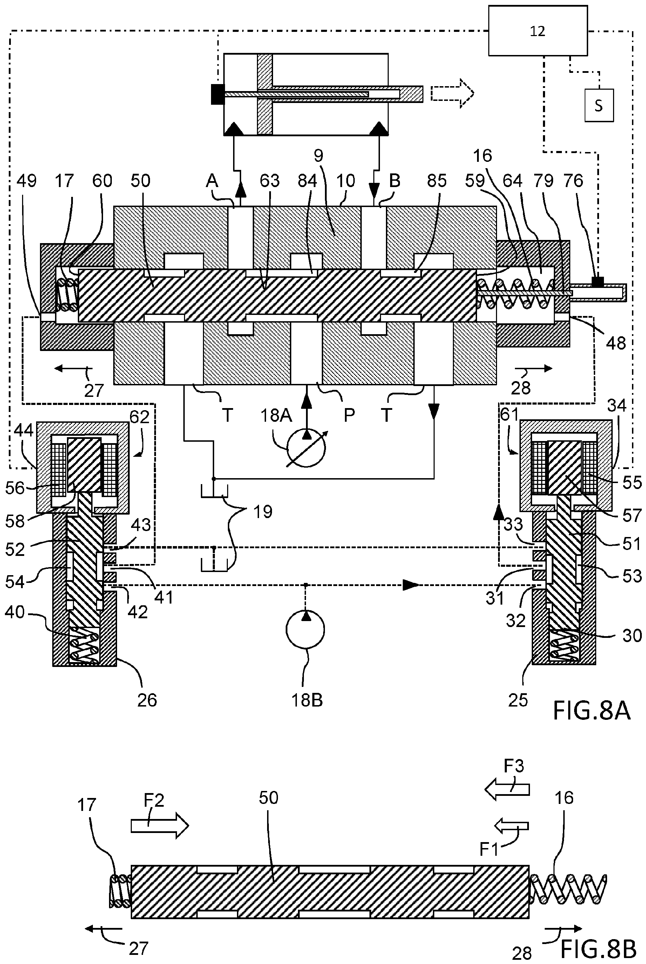

The example operating state depicted in figures 8A-8B corresponds to a steady-state operating state with the main spool 50 located in a relatively large actuation position in the first actuation direction 27, and this operating state may correspond to for example time point t1 in figure 10. In other words, the electronic control system 12 controls the energization level of the first solenoid 61 for actuating and displacing the pilot spool 51 of the first pilot valve 25 in a position where the inlet port 32 is set in fluid communication with outlet port 31 via the recess 53, such that fluid pressure from a pilot fluid supply 18B is routed to the first pilot pressure port 48 of the directional control valve 10 and configured for exerting an axial force on the first longitudinal end 59 of the main spool 50 for moving the main spool 50 in the first direction 27.

In the example, non-limiting, embodiment of the directional control valve of figure 7A-9A, such displacement of the main spool 50 opens a flow passage from the pump port P to port A via a first recess 84 in the main spool 50, as well as a further flow passage from port B to the tank port T via a second recess 85 in the main spool 50, thereby enabling operation of the hydraulic consumer 12, e.g. hydraulic actuator.

Consequently, in the operating state depicted in figure 8A and 8B, which corresponds about to time point t1 in figure 10, a current 38 flowing through the coil of the first solenoid 61 may be about 500 mA, and with a ripple caused by a pulse-width modulation. This level of energization of the first solenoid 61 causes the actuation of the first pilot spool 51, thereby providing a pilot pressure 37 supplied from the first pilot valve 25 of about 15 bar, which causes the main spool 50 to be displaced about 6 mm in the first direction 27 from the neutral spring-biased position when being supplied to first pilot pressure port 48 and allowed to act on the first longitudinal end 59 of the main spool 50. In this operating state, the pump port P is connected with port A and the pump port P is connected to port B.

Moreover, with reference to figure 8B that shows the forces acting on the main spool 50 in this operating state, the main spool 50 is in a steady-state position in which the combined force F1+F3 is equal to F2, wherein F1 corresponds to a spring force from the relatively uncompressed first spring 46 acting for pushing the main spool 50 towards a first direction 27, F3 corresponds to the pilot force F3 generated by the pilot pressure from the first pilot valve 25 a urging the main spool in first direction 27, and F2 corresponds to the spring force F2 of the relatively compressed second spring 17 acting for pushing the main spool 50 towards the second direction 28.

Next, at about time point t2, the electronic control system 12 receives or determines an instruction for initiating return motion of the main spool of the hydraulic directional control valve from an actuated position towards the spring-biased neutral position of the main spool. If the electronic control system 12 would simply merely stop energization of the first solenoid 61 at this point, the main spool 50 would start motion towards the centre, spring-biased, position, because the spring force F2 of the relatively compressed second spring 17 acting for pushing the main spool 50 towards the second direction 28 is larger than the spring force F1 of the relatively uncompressed first spring 46 acting for pushing the main spool 50 towards a first direction 27.

However, the spring force F2 of the relatively compressed second spring 17 acting for pushing the main spool 50 towards the second direction 28 must overcome the inertial mass of the main spool 50, the flow resistance associated with pushing out the pilot fluid from the first pressure chamber 64 of the direction control valve 50 and back to for example the reservoir 19, and possibly flow forces induced by the hydraulic fluid flowing from pump port P to port A. Consequently, for time period for closing the main spool 50 and stopping operation of the hydraulic consumer 15 may be relatively long, thereby causing problems associated with slow responsiveness, such as e.g. less accurate control, increased wear on tools, etc.

The main idea of this new valve function is to increase acceleration and speed of the main spool 50 of the directional control valve 10 when the main spool 50 in controlled to go from a first position to a second, less actuated, position. This can be achieved by using the second pilot valve 26 for providing a temporary pilot pressure for "kicking" the main spool 50 towards the centre position and thereby reducing the closing time.

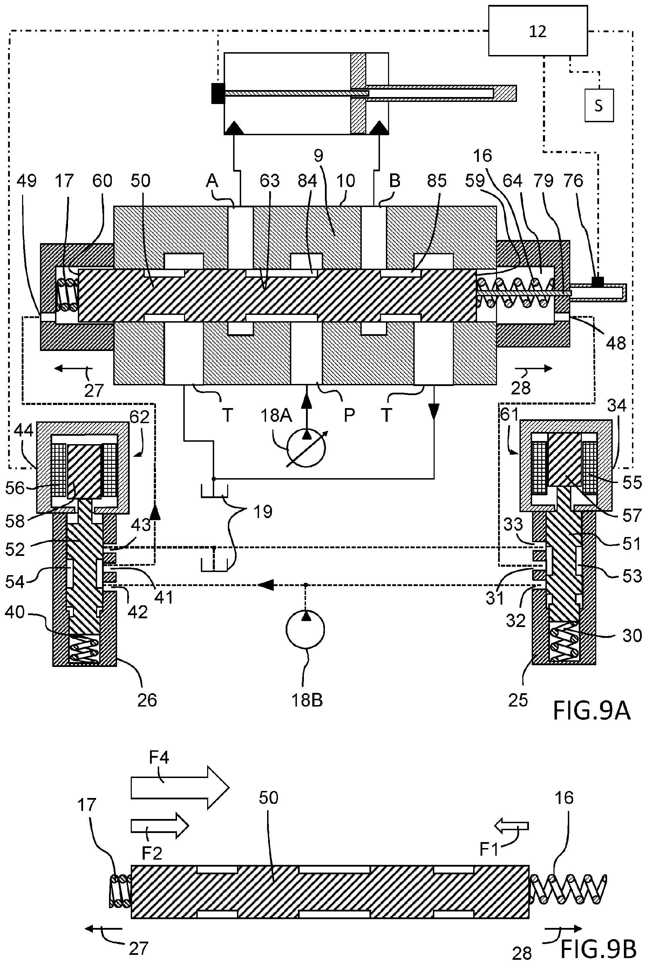

Such a scenario is depicted in figure 9A and 9B, wherein the first solenoid 61 has be de-energized and the first pilot spool 51 has returned to the neutral position, thereby enabling evacuation of the pilot pressure from the first pressure chamber 64, the second solenoid 62 has been temporarily energized and the second pilot spool 52 is actuated for opening a flow path from the inlet port 42 to the outlet port 41 via the recess 54, such that fluid pressure from a pilot fluid supply 18B is routed to the second pilot pressure port 49 of the directional control valve 10 and configured for exerting an axial force on the second longitudinal end 60 of the main spool 50 for moving the main spool 50 in the second direction 28 towards the neutral position.

Given the right amount of such a counter pilot pressure, i.e. oppositely arranged pilot pressure, under a certain time interval, the time response of the spool returning towards the neutral position can be significantly reduced.

In other words, in an event when the electronic control system 12 determines or is instructed to for example quickly stopping or at least reducing operation of a hydraulic consumer 15, the electronic control system 12 may reduce or stop a control pressure acting on a first longitudinal end 59 of the main spool 50, and substantially simultaneously applying a short-term counter-pressure acting on a second longitudinal end 60 of the main spool 50 for providing an accelerated return motion of the main spool 50 towards the spring-biased neutral position of the main spool 50.

In the example embodiment of the hydraulic valve arrangement showed in figure 9A, the electronic control system 12 may thus be configured for controlling the first solenoid 61 to reduce or stop pilot pressure acting on a first longitudinal end 59 of the main spool 50, and for controlling, i.e. supplying a temporary current pulse to, the second solenoid 62 to substantially simultaneously providing a short-term increase of pilot pressure acting on a second longitudinal end 60 of the main spool 50 for providing an accelerated return motion of the main spool 50 towards a spring-biased neutral position of the main spool 50.

As a result, return motion of the main spool 50 in a second actuation direction 28 from the actuated position towards the spring-biased neutral position is configured to be controlled by the return spring 17 and by the second solenoid 62 acting on the pilot spool 52 of the second pilot valve 26 that controls a pilot fluid pressure that acts on the second longitudinal end 60 of the main spool 50.

Moreover, with reference to figure 9B that shows the forces acting on the main spool 50 at time point t2, the combined force F2+F4 are set to be significantly larger than force F1, wherein F1 corresponds to a spring force from the relatively uncompressed first spring 46 acting for pushing the main spool 50 towards a first direction 27, F2 corresponds to the spring force F2 of the relatively compressed second spring 17 acting for pushing the main spool 50 towards the second direction 28, and F4 corresponds to the pilot force F4 generated by the pilot pressure from the second pilot valve 26 urging the main spool in second direction 28. Since the combined force F2+F4 are set to be significantly larger than force F1, the time period required for moving the main spool 50 from the actuated position showed in figure 9A to the neutral position showed in figure 7A may be significantly reduced, and the time period from receiving instructions to stopping operation of the hydraulic consumer may also be reduced.

The effect of the short-term increase of pilot pressure on the second longitudinal end 60 of the main spool 50 is schematically illustrated in figure 10, which includes such short-term increase of pilot pressure, and figure 11, which rely merely on the spring force of the second spring 17 for moving the main spool 50 the closed position.

More in detail, at time point t2 in figure 9A the electronic control system 12 stops energizing the first solenoid 61 of the first pilot valve 25. The current level 38 in the first solenoid thus sinks gradually, due to the inductance of the first coil 55, towards zero, thereby causing the first pilot spool 51 to become displaced towards the neutral position due to the return spring 30. Moreover, the pilot pressure 37 supplied by the first pilot valve 25 sinks gradually towards zero bar in connection with the displacement of the pilot valve 51 towards neutral position.

Furthermore, at time t2, the electronic control system 12 temporarily energizes the second solenoid 62, as illustrated by the current peak 69 in figure 10. In the example embodiment of figure 10, the current supplied to the second solenoid 62 suddenly increased from 150 mA to 600 mA at time t2. This current peak 69 results in a temporary actuation of the second pilot spool 52, thereby providing a temporary pilot pressure 46 being supplied from the second pilot valve 26, which causes the main spool 50 to be more quickly displaced in the second direction 28.

In the examples of figure 10 and 11, it can be seen that the stopping time may be reduced from T2 of about 47 milliseconds in figure 11 and to about 33 milliseconds, reduction in time of about 30%.

The term "substantially simultaneously" used herein for defining the time point for applying or providing the short-term or temporary counter-pressure or counter-force acting on the second longitudinal end 60 of the main spool 50, corresponds to applying or providing the short-term or temporary counter-pressure or counter-force acting on the second longitudinal end 60 of the main spool 50 within a time interval of +/- 50 milliseconds, specifically +/- 10 milliseconds, and more specifically +/- 5 milliseconds, of the time point of reducing or stopping a control pressure or control force acting on the first longitudinal end of the main spool 50.

The term "substantially simultaneously" used herein for defining the time point for initiating the temporarily increase in energization level of the second solenoid 62 for providing the current peak 69 that enables the accelerated return motion of the main spool 50, in relation to the time point associated with the electronic control system stops, or at least significantly reduces, energizing the first solenoid 61 of the first pilot valve 25, refers for example +/- 50 milliseconds, specifically +/- 10 milliseconds, and more specifically +/- 5 milliseconds, or simply simultaneously.

In situations where a future stopping action taken electronic control system 12 is known or can be reliably estimated beforehand, i.e. in case a time point of a future de-energization of the first solenoid 61 of the first pilot valve 25 can be somehow accurately predicted, the time point for initiating the temporarily increase in energization level of the second solenoid 62 may be located before the time point of de-energizing the first solenoid 61, such as about 1 - 50 milliseconds before, specifically about 1-20 milliseconds before de-energizing the first solenoid 61. The energizing level of the second solenoid 62 is in this situation generally relatively large, such as at least 50%, preferably at least 75%, of the energization level of the first solenoid 61.

Figure 12 schematically illustrates a magnification of the short-term current peak 69 of figure 10, as well as the corresponding pilot pressure supplied from the second pilot valve 26. The illustrated delay of about 8 milliseconds of the pilot pressure 40 from the second pilot valve 26 in response to the supplied current peak 69 to the solenoid is caused partly by time for the second pilot spool 52 to become displaced to an actuated state and partly by the inherent delay in dynamic response characteristic of hydraulic fluid flow in the second pilot valve.

The size, form, shape and characteristic of the temporary voltage or current pulse of the second solenoid for generating the desired counter pressure, which causes the reduction of stopping time of the hydraulic actuator, may vary to a large extent and the illustration of the current peak 69 in figure 10 and 12 merely represents one example out of many possible alternative configurations.

The approach for measuring pulse characteristics herein, such as pulse length, pulse rise time, pulse fall time, etc. is measured using the 10% and 90% threshold values. Pulse rise time thus typically refers to the it takes for the leading edge of a pulse (voltage or current) to rise from 10% to 90% based on the average level before the pulse (0% level) and the pulse maximum value (100% level), respectively. In other words, in figure 12, pulse rise time corresponds to a time period T3 it takes for the leading edge of a pulse (current; voltage) to rise from a 10% threshold level 71, which represents 10% above the average value of the pulse parameter (current or voltage) immediately before the pulse, to a 90% threshold level 72, which represents having reached 90% of the pulse maximum value. Similarly, the decay time or fall time of the pulse trailing edge corresponds to a time period T4 starting when the pulse crosses the 90% line 73 of the pulse maximal value (100%) to a 10% line 74 in figure 12, which represents 10% above the average value (0%) of the pulse parameter (current or voltage) immediately after the pulse 69.

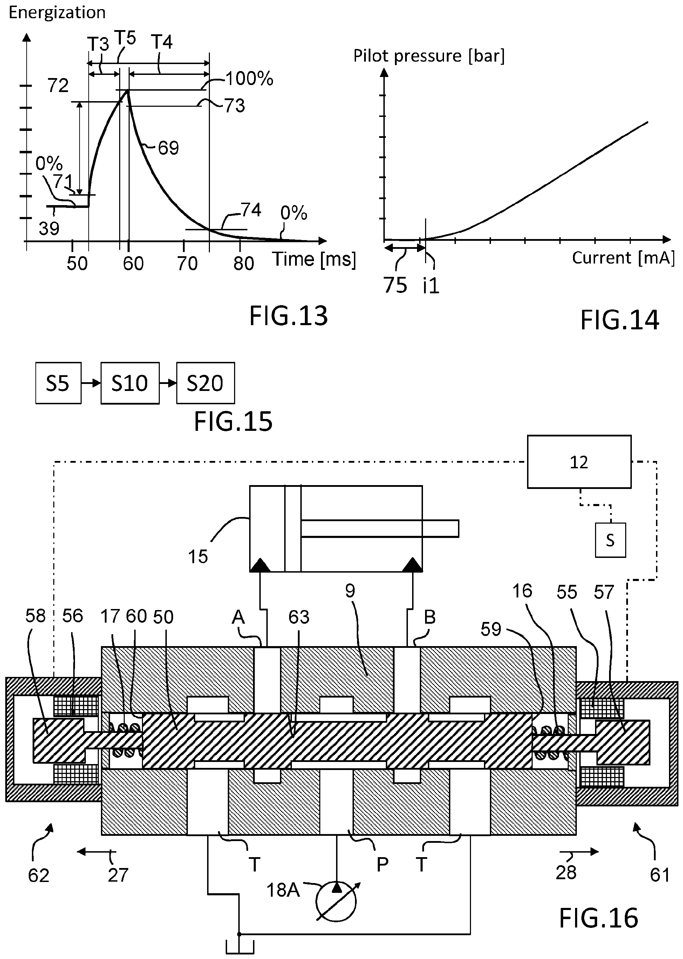

The 10% and 90% threshold levels 71, 72 associated with the rising edge may equal with the 10% and 90% threshold levels 74, 73 associated with the trailing edge, as schematically illustrated in figure 12. However, the 10% and 90% threshold levels 71, 72 associated with the rising edge may in some implementations differ from the 10% and 90% threshold levels 74, 73 associated with the trailing edge if for example the average value (0%) of the pulse parameter (current or voltage) immediately before the pulse 69 differs from the average value (0%) of the pulse parameter (current or voltage) immediately after the pulse 69, as schematically illustrated in figure 13.

With reference again to figure 12, the time period T5 corresponds to a pulse width of the pulse and is extends from the time point the signal crosses the 10% threshold level 71 associated with the rising edge until the signal crosses the 10% threshold level 74 associated with the trailing edge.

In some example embodiments of the method and hydraulic valve arrangement described herein, the short-term increase of pilot pressure or force acting on a second longitudinal end of the main spool is provided by temporarily energizing, or temporarily increasing an energizing level of, the second solenoid, over a time period T5 of 2 - 500 milliseconds, specifically 5 - 100 milliseconds and more specifically 5 - 50 milliseconds. This time period is referred to as pulse width above. In the example illustrated in figure 12, the pulse width T5 is about 19 milliseconds.

In some example embodiments of the method and hydraulic valve arrangement described herein, the short-term increase of pilot pressure or force acting on a second longitudinal end of the main spool is provided by supplying a current pulse through a coil of the second solenoid 62, wherein the current pulse has a rise time T3 in the range of 1 - 250 milliseconds, specifically 2-75 milliseconds and more specifically 3 - 25 milliseconds. In the example illustrated in figure 12, the rise time T3 is about 5 milliseconds.

Figure 14 schematically illustrates a solenoid current - pilot pressure characteristic of an example embodiment of the solenoid pilot valve, such as a for example described with reference to figures 7A-9A. Due to factors such as the return force of the return spring 30, 40 of the pilot valve and the actuation level of the pilot spool 51, 52 that corresponds to opening of the passage between the inlet port 32,42 and outlet port 31, 41, the energizing current of the solenoid must reach a certain threshold value before the pilot valve 25, 26 starts supplying any pilot pressure at all. This non-effective working area is marked with reference sign 75 in figure 14. For the purpose of accomplishing an even more rapid increase in pilot pressure acting for closing the main spool 50, it may thus be beneficial to set the second solenoid in a pre-energized state, i.e. applying a current to the second solenoid at current level of about i1 for over-coming the non-effective working area 75 of the second pilot valve 26.

This type of pre-energized state of the second solenoid 62 is shown in figure 10, where the current level 39 supplied to second solenoid 62 is about 150 mA at for example time point t1, and also after completed motion of the main spool 50 to the neutral position. In the example illustration of figure 13, second solenoid 62 is pre-energized with a current level 39 of about 150 mA some time before initiating the current peak 69, but not after completed motion of the main spool 50 to the neutral position. Moreover, the second pilot spool 52 is illustrated being set in re-energized state, i.e. slightly actuated state just before closing of flow passage between outlet port 41 and discharge port 43 and before opening of a flow passage between inlet port 42 and outlet port 41 in figure 8A.

Consequently, with reference to figure 15, the method and hydraulic valve arrangement of the present invention may comprise, in addition to the steps S10 and S20 described above with reference to figure 6, a prior step S5 of: obtaining information indicating the current actuating position of the main spool, and controlling the second solenoid for setting the pilot spool of the second pilot valve in a pre-energized state when the obtained information indicates a highly actuated position of the main spool 50, such as for example about 50-100% actuation position, specifically about 75-100% actuation position.

The prior step S5 of obtaining information indicating the current actuating position of the main spool may for example involve detecting position of main spool 50 itself. However, since the position of main spool 50 may be estimated based on various other operating parameters, the prior step S5 of obtaining information indicating the current actuating position of the main spool may for example alternatively involve detecting outlet flow rate from main spool, detecting outlet flow pressure from main spool, detecting actuator speed of the hydraulic consumer 15, detecting pilot pressure of the first pilot valve 25, detecting actuation position of first pilot spool 51, detecting current level of first solenoid, or the like.

In the method and hydraulic valve arrangement of the present invention, the step of setting the pilot spool of the second pilot valve 26 in a pre-energized state corresponds to energizing the second solenoid for overcoming any initial dead area, i.e. non-working area 75, in which increased energization does not result in increased control pressure from the second pilot valve 26.

Increased energization of the solenoid may be accomplished by increasing the current level supplied to the solenoid and/or by increasing a duty-rate of a pulse-widthmodulated solenoid.

In some example embodiments of the method and hydraulic valve arrangement described herein, the short-term increase of pilot pressure or force acting on a second longitudinal end of the main spool is provided by energizing the second solenoid, using for example a continuous or PWM based solenoid energization, with an energizing level that corresponds to at least 50%, specifically at least 75%, and more specifically 100% actuation position, i.e. spool travel, of the main spool 50 in a steady-state operation. In other words, the energization level of the second solenoid 62 would, in a steady state condition of the hydraulic valve arrangement, result in at least 50%, specifically at least 75%, and more specifically 100% of maximum spool travel of the main spool 50.

In general throughout this disclosure, maximum spool travel of the main spool 50 of any specific directional control valve 10 corresponds to the maximal nominal spool travel, also referred to as spool actuation position, of the specific directional control valve 10. The maximal nominal spool travel is typically a parameter of the specification of any commercial directional control valve. Moreover, for example 50% actuation position refers to 50% actuation position of said maximum nominal spool travel, and so on.

In some example embodiments of the method and hydraulic valve arrangement described herein, the method comprises an initial step S10 of obtaining input information or instructions for shifting the main spool from a first actuated position, in particular from highly actuated position or in the range of 60 - 100% of a maximum spool travel, to a second less actuated position, in particular a lightly actuated operation position or in the range of 0 - 40% of a maximum spool travel or to a neutral position.

The method may then in response thereto performing a subsequent step S20 of reducing or stopping a control pressure or control force acting on a first longitudinal end of the main spool, and substantially simultaneously applying a short-term counter-pressure or counter-force acting on a second longitudinal end of the main spool for providing an accelerated return motion of the main spool towards the spring-biased neutral position of the main spool.

More in detail, said subsequent step S20 may involve controlling the first solenoid to reduce pilot pressure or force acting on a first longitudinal end of the main spool, and controlling the second solenoid to substantially simultaneously providing a short-term increase of pilot pressure or force acting on a second longitudinal end of the main spool for providing an accelerated return motion of the main spool towards a spring-biased neutral position of the main spool.

In some example embodiments of the method and hydraulic valve arrangement described herein, the step S20 of controlling, i.e. energizing, the second solenoid to substantially simultaneously providing a short-term increase of pilot pressure or force acting on a second longitudinal end of the main spool involves either: energizing the second solenoid using a voltage or current pulse having predetermined voltage or current level, duration and shape; or monitoring current position of main spool, and energizing the second solenoid using a feedback controller that takes at least current position of main spool into account.

The subsequent step S20 of controlling the second solenoid to substantially simultaneously providing a short-term increase of pilot pressure or force acting on a second longitudinal end of the main spool by energizing the second solenoid using a voltage or current pulse having predetermined voltage or current level, duration and shape may be referred to as open loop control of the second solenoid, because energization characteristic is not taking into account the resulting motion of the main spool 50. Instead, one or more predetermined energizing pulse form are stored in a predetermined lookup data memory and selected by the electronic control system based on suitable parameters, such as starting position and target position of the main spool, oil temperature, or the like.

On the other hand, the subsequent step S20 of controlling the second solenoid to substantially simultaneously providing a short-term increase of pilot pressure or force acting on a second longitudinal end of the main spool involves monitoring current position of main spool by energizing the second solenoid using a feedback controller that takes the position of main spool into account may be referred as closed loop control.

As briefly described above with reference to 3, the solution for providing accelerated return motion of the main spool of the hydraulic directional control valve may be implemented in direct controlled directional control valves. An example embodiment of a more detailed direct-controlled valve arrangement is schematically illustrated in figure 16, wherein the part that are the same as described with reference to figure 7A are not repeated here. The differing feature is the direct-acting first and second solenoids 61, 62, which thus are mounted such the each of the first and second core or plunger 57, 58, may contact and directly transfer a mechanical to force to the main spool for axially displacing the main spool against a return force provided by the first and second axial springs 16, 17.

In this example embodiments of the method and hydraulic valve arrangement, motion of the main spool 50 in a first actuation direction 27 from the spring-biased neutral position is configured to be controlled by the first solenoid 61 acting directly on the first longitudinal end 59 of the main spool 50, and return motion of the main spool 50 in a second actuation direction 28 from an actuated position towards the spring-biased neutral position is configured to be controlled by the second axial spring 17 in combination with the second solenoid 62 acting directly on the second longitudinal end 60 of the main spool 50, thereby providing an accelerated return motion of the main spool 50 towards the spring-biased neutral position of the main spool.

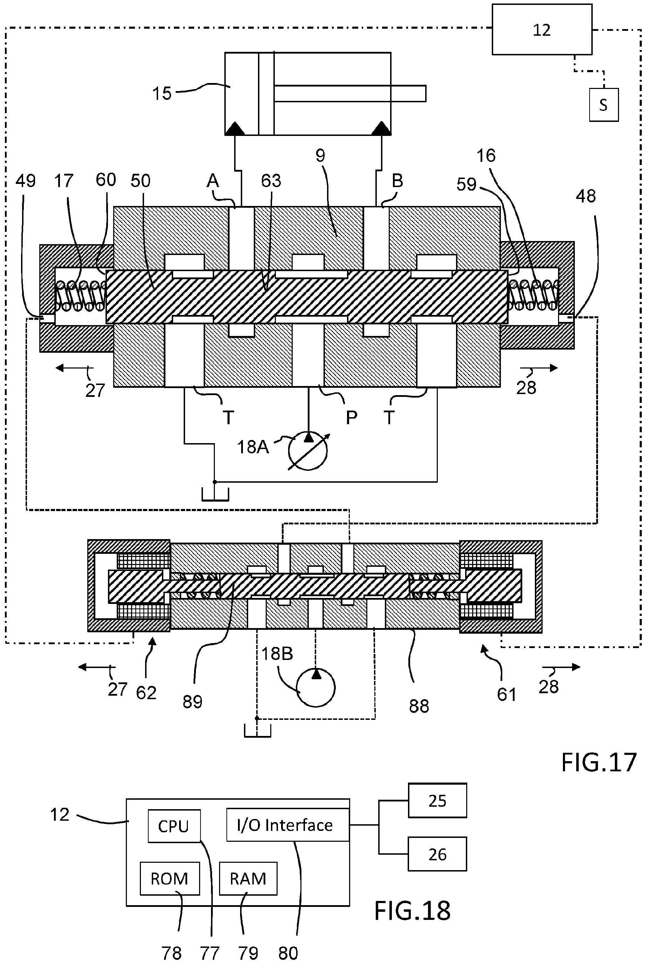

Moreover, the method and hydraulic valve arrangement according to the disclosure may also be implemented on a valve arrangement as schematically illustrated in figure 17, which shows a solenoid-controlled and pilot-operated hydraulic valve arrangement including a pilot-operated direction control valve 10 substantially identical to that described above with reference to fig. 7A-9A, but where the pilot valve 88 does not include two separate solenoid controlled pilot valves 25, 26 as described with reference to figure 7A-9A but instead includes a single pilot spool 89 that is operated in a first axial direction 27 by means of a first solenoid 61 and in a second axial direction 28 by means of a second solenoid 62.

The method and hydraulic valve arrangement 1 according to figure 17 provides accelerated return motion of a main spool 50 of the pilot-operated solenoid-controlled hydraulic directional control valve 10 by controlling the first solenoid 61 to reduce or stop pilot pressure acting on a first longitudinal end 59 of the main spool 50, and controlling a second solenoid 62 to substantially simultaneously controlling the second solenoid 62 providing a short-term increase of pilot pressure acting on the second longitudinal end 60 of the main spool 50 for providing the accelerated return motion of the main spool 50 towards the spring-biased neutral position of the main spool 50.

With reference to figure 6, as well as figure 18 in combination with any of figures 2-5, 7A or 16 or 17, there is represented a computer-implemented method for accelerating return motion of a main spool 50 of a hydraulic directional control valve 10 towards a spring-biased neutral position of the main spool 50. The computer-implemented method is performed using a computing device 12, such as a microcontroller or an electronic control system having a central processing unit (CPU) 77, ROM data memory 78 for storing a computer program with instructions that are configured to be executed by the CPU 77, a RAM data member for temporary storing data during execution of the program, and an input/output interface 80 for receiving sensor data from one or more external sensors S and/or for controlling operation of the first and second solenoids 61, 62.

The computer-implemented method comprises a first step S10 of receiving or determining, with the computing device 12, an instruction for initiating return motion of the main spool 50 of the hydraulic directional control valve 10 from an actuated position towards the spring-biased neutral position of the main spool 50; and a second step S20 of controlling, with the computing device, the operation of a first solenoid 61 for reducing or stopping a control pressure or control force acting on a first longitudinal end of the main spool 50, and controlling, with the computing device 12, the operation of a second solenoid 62 to substantially simultaneously applying a short-term counter-pressure or counter-force acting on a second longitudinal end of the main spool 50 for providing an accelerated return motion of the main spool towards the spring-biased neutral position of the main spool 50.

It will be appreciated that the above description is merely exemplary in nature and is not intended to limit the present invention, its application or uses. While specific examples have been described in the specification and illustrated in the drawings, it will be understood by those of ordinary skill in the art that various changes may be made and equivalents may be substituted for elements thereof without departing from the scope of the present invention as defined in the claims. Furthermore, modifications may be made to adapt a particular situation or material to the teachings of the present invention without departing from the essential scope thereof.

Therefore, it is intended that the present invention not be limited to the particular examples illustrated by the drawings and described in the specification as the best mode presently contemplated for carrying out the teachings of the present invention, but that the scope of the present invention will include any embodiments falling within the appended claims. Reference signs mentioned in the claims should not be seen as limiting the extent of the matter protected by the claims, and their sole function is to make claims easier to understand.

## Claims

1. A method for accelerating return motion of a main spool (50) of a hydraulic directional control valve (10) towards a spring-biased neutral position of the main spool (50), the method comprising reducing or stopping a control pressure or control force acting on a first longitudinal end of the main spool (50), and substantially simultaneously applying a short-term counter-pressure or counter-force acting on a second longitudinal end (60) of the main spool (50) for providing an accelerated return motion of the main spool (50) towards the spring-biased neutral position of the main spool (50).

2. The method according to claim 1, wherein the counter-pressure or counter-force acting on the second longitudinal end (60) of the main spool (50) is applied over a time period of 2 - 500 milliseconds, specifically 5 - 100 milliseconds and more specifically 5-50 milliseconds.

3. The method according to claim 1 or claim 2 for accelerating return motion of a main spool (50) of a pilot-operated solenoid-controlled hydraulic directional control valve (10), or for accelerating return motion of a main spool (50) of a solenoid-operated hydraulic directional control valve (10), the method comprising controlling a first solenoid (61) to reduce or stop pilot pressure or force acting on a first longitudinal end (59) of the main spool (50), and controlling a second solenoid (62) to substantially simultaneously providing a short-term increase of pilot pressure or force acting on a second longitudinal end (60) of the main spool (50) for providing the accelerated return motion of the main spool (50) towards the spring-biased neutral position of the main spool (50).

4. The method according to claim 3,
wherein motion of the main spool (50) in a first actuation direction (27) from the spring-biased neutral position is controlled either indirectly by the first solenoid (61) acting on a pilot spool (51, 89) of a pilot valve (25, 88) that controls a pilot fluid pressure that acts on the first longitudinal end (59) of the main spool (50), or by the first solenoid (61) acting directly on the first longitudinal end (59) of the main spool (50), and
wherein a return motion of the main spool (50) in a second actuation direction from an actuated position towards the spring-biased neutral position is controlled partly by a return spring arrangement (17) and partly either indirectly by the second solenoid (62) acting on a pilot spool (52, 89) of a pilot valve (26, 88) that controls a pilot fluid pressure that acts on the second longitudinal end (60) of the main spool (50) or by the second solenoid (62) acting directly on the second longitudinal end (60) of the main spool (50).

5. The method according to any of the preceding claims 3-4, wherein the short-term increase of pilot pressure or force acting on a second longitudinal end (60) of the main spool (50) is provided by temporarily energizing, or temporarily increasing an energizing level of, the second solenoid (62), over a time period of 2 - 500 milliseconds, specifically 5 - 100 milliseconds and more specifically 5 - 50 milliseconds.

6. The method according to any of the preceding claims 3 - 5, wherein the short-term increase of pilot pressure or force acting on a second longitudinal end (60) of the main spool (50) is provided by supplying a current pulse through a coil (56) of the second solenoid (62), wherein the current pulse has a rise time in the range of 2 - 250 milliseconds, specifically 5 - 75 milliseconds and more specifically 5 - 25 milliseconds.

7. The method according to any of the preceding claims 1-6, wherein the method comprises an initial step (S10) of:
obtaining instructions for shifting the main spool (50) from a first actuated position to a second less actuated position, in particular from highly actuated position to a lightly actuated operation position or to a neutral position, and in response thereto performing said step of:
reducing or stopping a control pressure or control force acting on a first longitudinal end (59) of the main spool (50), and substantially simultaneously applying a short-term counter-pressure or counter-force acting on a second longitudinal end (60) of the main spool (50) for providing an accelerated return motion of the main spool (50) towards the spring-biased neutral position of the main spool (50), or more specifically
controlling the first solenoid (61) to reduce pilot pressure or force acting on a first longitudinal end (59) of the main spool (50), and controlling the second solenoid (62) to substantially simultaneously providing a short-term increase of pilot pressure or force acting on a second longitudinal end (60) of the main spool (50) for providing an accelerated return motion of the main spool (50) towards a spring-biased neutral position of the main spool (50).

8. The method according to any of the preceding claims 3-7, wherein the method comprises a prior step (S5) of:
obtaining information indicating the current actuating position of the main spool (50), and
controlling the second solenoid (62) for setting the pilot spool (52) of the second pilot valve (26) in a pre-energized state when the current actuating position of the main spool (50) corresponds to a highly actuated operating position.

9. The method according to claim 8, wherein the step of setting the pilot spool (52) of the second pilot valve (26) in a pre-energized state corresponds to energizing the second solenoid (62) for overcoming any initial dead area, in which increased energization does not result in increased control pressure from the second pilot valve (26).

10. The method according to any of the preceding claims 3-9, wherein the step of controlling the second solenoid (62) to substantially simultaneously providing a short-term increase of pilot pressure or force acting on a second longitudinal end (60) of the main spool (50) involves either:
energizing the second solenoid (62) using a voltage or current pulse having predetermined voltage or current level, duration and shape; or
monitoring current position of main spool (50) and energizing the second solenoid (62) using a feedback controller that takes at least current position of main spool (50) into account.

11. A hydraulic valve arrangement comprising:
a hydraulic directional control valve (10) having a main spool (50); and
an electronic control system (12) configured for controlling motion and/or position of the main spool (50),
**characterised in that**:
the electronic control system (12) is configured for reducing or
stopping a control pressure or control force acting on a first longitudinal end (59) of the main spool (50), and substantially simultaneously applying a short-term counter-pressure or counter-force acting on a second longitudinal end (60) of the main spool (50) for providing an accelerated return motion of the main spool (50) towards the spring-biased neutral position of the main spool (50).

12. The hydraulic valve arrangement according to 11, wherein
the hydraulic directional control valve (10) is a pilot-operated hydraulic directional control valve (10) that is connected to and controlled by a solenoid-operated pilot valve arrangement having first and second solenoids (61, 62); or the hydraulic directional control valve (10) is a solenoid-operated hydraulic directional control valve (10) having first and second direct-acting solenoids (61, 62),
wherein the electronic control system (12) is operatively connected to the first and second solenoids (61, 62) and configured for controlling the first solenoid (61) to reduce pilot pressure or force acting on a first longitudinal end (59) of the main spool (50), and for controlling the second solenoid (62) to substantially simultaneously providing a short-term increase of pilot pressure or force acting on a second longitudinal end (60) of the main spool (50) for providing an accelerated return motion of the main spool (50) towards a spring-biased neutral position of the main spool (50).

13. The hydraulic valve arrangement according to claim 12, wherein motion of the main spool (50) in a first actuation direction (27) from the spring-biased neutral position is configured to be controlled either indirectly by the first solenoid (61) acting on a pilot spool (51, 89) of a pilot valve (25, 89) that controls a pilot fluid pressure that acts on the first longitudinal end (59) of the main spool (50), or by the first solenoid (61) acting directly on the first longitudinal end (59) of the main spool (50), and wherein a return motion of the main spool (50) in a second actuation direction (28) from an actuated position towards the spring-biased neutral position is configured to be controlled by a return spring arrangement (17) and either indirectly by the second solenoid (62) acting on a pilot spool (52) of a pilot valve (26) that controls a pilot fluid pressure that acts on the second longitudinal end (60) of the main spool (50), or by the second solenoid (62) acting directly on the second longitudinal end (60) of the main spool (50).

14. The hydraulic valve arrangement according to any of the preceding claims 12 - 13, wherein the pilot valve arrangement includes a separate first pilot valve (25) and a separate second pilot valve (26), wherein motion of the main spool (50) in a first actuation direction (27) from the spring-biased neutral position is configured to be controlled by the first solenoid (61) acting on a pilot spool of a first pilot valve (25) that controls a pilot fluid pressure that acts on the first longitudinal end (59) of the main spool (50), and wherein a return motion of the main spool (50) in a second actuation direction from an actuated position towards the spring-biased neutral position is configured to be controlled by a return spring arrangement (17) and by the second solenoid (62) acting on a pilot spool of a second pilot valve (26) that controls a pilot fluid pressure that acts on the second longitudinal end (60) of the main spool (50).

15. The hydraulic valve arrangement according to any of the preceding claims 11 - 14, wherein the hydraulic directional control valve (10) further comprises a valve housing (9) with at least a first fluid port (P, T), a second fluid port (A, B) and a bore (63) for enabling slidable motion of the main spool (50) between at least the spring biased neutral position and a first actuated position, wherein motion of the main spool (50) between the spring biased neutral position and the first actuated position controls a flow path extending through the hydraulic directional control valve (10) between the first and second fluid ports (P, T, A, B).

## Patentansprüche

1. Verfahren zum Beschleunigen einer Rückstellbewegung eines Hauptschiebers (50) eines hydraulischen Wegeventils (10) hin zu einer federbelasteten neutralen Position des Hauptschiebers (50), wobei das Verfahren das Verringern oder Stoppen eines Steuerdrucks oder einer Steuerkraft, der bzw. die auf ein erstes Längsende des Hauptschiebers (50) einwirkt, und im Wesentlichen gleichzeitiges Anlegen eines kurzzeitigen Gegendrucks oder einer kurzzeitigen Gegenkraft, der bzw. die auf ein zweites Längsende (60) des Hauptschiebers (50) einwirkt, um eine beschleunigte Rückstellbewegung des Hauptschiebers (50) hin zu der federbelasteten neutralen Position des Hauptschiebers (50) bereitzustellen, umfasst.

2. Verfahren nach Anspruch 1, wobei der Gegendruck oder die Gegenkraft, der bzw. die auf das zweite Längsende (60) des Hauptschiebers (50) einwirkt, über einen Zeitraum von 2 bis 500 Millisekunden angelegt wird, insbesondere 5 bis 100 Millisekunden und spezifischer 5 bis 50 Millisekunden angelegt wird.

3. Verfahren nach Anspruch 1 oder 2 zum Beschleunigen einer Rückstellbewegung eines Hauptschiebers (50) eines vorsteuerbetriebenen magnetspulengesteuerten hydraulischen Wegeventils (10) oder zum Beschleunigen einer Rückstellbewegung eines Hauptschiebers (50) eines magnetspulenbetriebenen hydraulischen Wegeventils (10), wobei das Verfahren das Steuern einer ersten Magnetspule (61) zum Verringern oder Stoppen eines Vorsteuerdrucks oder einer Vorsteuerkraft, der bzw. die auf ein erstes Längsende (59) des Hauptschiebers (50) einwirkt, und das Steuern einer zweiten Magnetspule (62) zum im Wesentlichen gleichzeitigen Bereitstellen einer kurzzeitigen Erhöhung eines Vorsteuerdrucks oder einer Vorsteuerkraft, der bzw. die auf ein zweites Längsende (60) des Hauptschiebers (50) einwirkt, um die beschleunigte Rückstellbewegung des Hauptschiebers (50) hin zu der federbelasteten neutralen Position des Hauptschiebers (50) bereitzustellen, umfasst.

4. Verfahren nach Anspruch 3,
wobei eine Bewegung des Hauptschiebers (50) in einer ersten Betätigungsrichtung (27) aus der federbelasteten neutralen Position entweder indirekt durch die erste Magnetspule (61), die auf einen Vorsteuerschieber (51, 89) eines Vorsteuerventils (25, 88) wirkt, das einen Vorsteuerfluiddruck steuert, der auf das erste Längsende (59) des Hauptschiebers (50) wirkt, oder durch die erste Magnetspule (61) gesteuert wird, die direkt auf das erste Längsende (59) des Hauptschiebers (50) einwirkt, und
wobei eine Rückstellbewegung des Hauptschiebers (50) in einer zweiten Betätigungsrichtung aus einer betätigten Position hin zu der federbelasteten neutralen Position teilweise durch eine Rückstellfederanordnung (17) und teilweise entweder indirekt durch die zweite Magnetspule (62), die auf einen Vorsteuerschieber (52, 89) eines Vorsteuerventils (26, 88) einwirkt, das einen Vorsteuerfluiddruck steuert, der auf das zweite Längsende (60) des Hauptschiebers (50) einwirkt, oder durch die zweite Magnetspule (62) gesteuert wird, die direkt auf das zweite Längsende (60) des Hauptschiebers (50) einwirkt.

5. Verfahren nach einem der vorstehenden Ansprüche 3 bis 4, wobei die kurzzeitige Erhöhung des Vorsteuerdrucks oder der Vorsteuerkraft, der bzw. die auf ein zweites Längsende (60) des Hauptschiebers (50) einwirkt, durch vorübergehendes Ansteuern oder vorübergehendes Erhöhen einer Ansteuerungshöhe der zweiten Magnetspule (62) über einen Zeitraum von 2 bis 500 Millisekunden, insbesondere 5 bis 100 Millisekunden und spezifischer 5 bis 50 Millisekunden bereitgestellt wird.

6. Verfahren nach einem der vorstehenden Ansprüche 3 bis 5, wobei die kurzzeitige Erhöhung des Vorsteuerdrucks oder der Vorsteuerkraft, der bzw. die auf ein zweites Längsende (60) des Hauptschiebers (50) einwirkt, durch Speisen eines Stromimpulses durch eine Spule (56) der zweiten Magnetspule (62) bereitgestellt wird, wobei der Stromimpuls eine Anstiegszeit in dem Bereich von 2 bis 250 Millisekunden, insbesondere 5 bis 75 Millisekunden und spezifischer 5 bis 25 Millisekunden aufweist.

7. Verfahren nach einem der vorstehenden Ansprüche 1 bis 6, wobei das Verfahren einen ersten Schritt (S10) umfasst des:
Erhaltens von Anweisungen zum Verschieben des Hauptschiebers (50) aus einer ersten betätigten Position in eine zweite weniger stark betätigte Position, insbesondere aus einer stark betätigten Position in eine leicht betätigte Betriebsposition oder in eine neutrale Position und als Antwort darauf das Durchführen des Schrittes des:
Verringerns oder Stoppens eines Steuerdrucks oder einer Steuerkraft, der bzw. die auf ein erstes Längsende (59) des Hauptschiebers (50) einwirkt, und im Wesentlichen gleichzeitiges Anlegen eines kurzzeitigen Gegendrucks oder einer kurzzeitigen Gegenkraft, der bzw. die auf ein zweites Längsende (60) des Hauptschiebers (50) einwirkt, um eine beschleunigte Rückstellbewegung des Hauptschiebers (50) hin zu der federbelasteten neutralen Position des Hauptschiebers (50) bereitzustellen, oder spezifischer:
Steuerns der ersten Magnetspule (61), um einen Vorsteuerdruck oder eine Vorsteuerkraft zu verringern, der bzw. die auf ein erstes Längsende (59) des Hauptschiebers (50) einwirkt, und Steuerns der zweiten Magnetspule (62), um eine kurzzeitige Erhöhung eines Vorsteuerdrucks oder einer Vorsteuerkraft im Wesentlichen gleichzeitig bereitzustellen, der bzw. die auf ein zweites Längsende (60) des Hauptschiebers (50) einwirkt, um eine beschleunigte Rückstellbewegung des Hauptschiebers (50) hin zu einer federbelasteten neutralen Position des Hauptschiebers (50) bereitzustellen.

8. Verfahren nach einem der vorstehenden Ansprüche 3 bis 7, wobei das Verfahren einen vorherigen Schritt (S5) umfasst des:
Erhaltens von Informationen, die die aktuelle Betätigungsposition des Hauptschiebers (S5) anzeigen, und
Steuerns der zweiten Magnetspule (62), um den Vorsteuerschieber (52) des zweiten Vorsteuerventils (26) in einen vorangesteuerten Zustand zu setzen, wenn die aktuelle Betätigungsposition des Hauptschiebers (50) einer stark betätigten Betriebsposition entspricht.

9. Verfahren nach Anspruch 8, wobei der Schritt des Setzens des Vorsteuerschiebers (52) des zweiten Vorsteuerventils (26) in einen vorangesteuerten Zustand dem Ansteuern der zweiten Magnetspule (62) zum Überwinden eines anfänglichen Totbereichs entspricht, in dem eine erhöhte Ansteuerung nicht zu einem erhöhten Steuerdruck von dem zweiten Vorsteuerventil (26) führt.

10. Verfahren nach einem der vorstehenden Ansprüche 3 bis 9, wobei der Schritt des Steuerns der zweiten Magnetspule (62), um eine kurzzeitige Erhöhung des Vorsteuerdrucks oder der Vorsteuerkraft im Wesentlichen gleichzeitig bereitzustellen, der bzw. die auf ein zweites Längsende (60) des Hauptschiebers (50) einwirkt, beinhaltet entweder:
Ansteuern der zweiten Magnetspule (62) unter Verwendung eines Spannungs- oder Stromimpulses mit einer vordefinierten Spannungs- oder Stromhöhe, -dauer und -form; oder
Überwachen der aktuellen Position des Hauptschiebers (50) und Ansteuern der zweiten Magnetspule (62) unter Verwendung einer Rückkopplungssteuerung, die zumindest eine aktuelle Position des Hauptschiebers (50) berücksichtigt.

11. Hydraulische Ventilanordnung, die umfasst:
ein hydraulisches Wegeventil (10) mit einem Hauptschieber (50); und
ein elektronisches Steuersystem (12), das so konfiguriert ist, dass eine Bewegung und/oder Position des Hauptschieber (50) steuert,
**dadurch gekennzeichnet, dass**
das elektronische Steuersystem (12) so konfiguriert ist, dass es einen Steuerdruck oder eine Steuerkraft verringert oder stoppt, der bzw. die auf ein erstes Längsende (59) des Hauptschiebers (50) einwirkt, und dass es einen kurzzeitigen Gegendruck oder eine kurzzeitige Gegenkraft im Wesentlichen gleichzeitig anlegt, der bzw. die auf ein zweites Längsende (60) des Hauptschiebers (50) einwirkt, um eine beschleunigte Rückstellbewegung des Hauptschiebers (50) hin zu der federbelasteten neutralen Position des Hauptschiebers (50) bereitzustellen.

12. Hydraulische Ventilanordnung nach Anspruch 11, wobei:
das hydraulische Wegeventil (10) ein vorsteuerbetriebenes hydraulisches Wegeventil (10) ist, das mit einer magnetspulenbetriebenen Vorsteuerventilanordnung mit ersten und zweiten Magnetspulen (61, 62) verbunden ist und von dieser gesteuert wird; oder das hydraulische Wegeventil (10) ein magnetspulenbetriebenes hydraulisches Wegeventil (10) mit ersten und zweiten direkt wirkenden Magnetspulen (61, 62) ist, wobei das elektronische Steuersystem (12) funktionsmäßig mit den ersten und zweiten Magnetspulen (61, 62) verbunden und so konfiguriert ist, dass es die erste Magnetspule (61) steuert, um einen Vorsteuerdruck oder eine Vorsteuerkraft zu verringern, der bzw. die auf ein erstes Längsende (59) des Hauptschiebers (50) einwirkt, und dass es die zweite Magnetspule (62) steuert, um eine kurzzeitige Erhöhung eines Vorsteuerdrucks oder einer Vorsteuerkraft im Wesentlichen gleichzeitig bereitzustellen, der bzw. die auf ein zweites Längsende (60) des Hauptschiebers (50) einwirkt, um eine beschleunigte Rückstellbewegung des Hauptschiebers (50) hin zu einer federbelasteten neutralen Position des Hauptschiebers (50) bereitzustellen.

13. Hydraulische Ventilanordnung nach Anspruch 12, wobei eine Bewegung des Hauptschiebers (50) in einer ersten Betätigungsrichtung (27) aus der federbelasteten neutralen Position so konfiguriert ist, dass sie entweder indirekt durch die erste Magnetspule (61), die auf einen Vorsteuerschieber (51, 89) eines Vorsteuerventils (25, 89) einwirkt, das einen Vorsteuerfluiddruck steuert, der auf das erste Längsende (59) des Hauptschiebers (50) einwirkt, oder durch die erste Magnetspule (61) gesteuert wird, die direkt auf das erste Längsende (59) des Hauptschiebers (50) einwirkt, und wobei eine Rückstellbewegung des Hauptschiebers (50) in einer zweiten Betätigungsrichtung (28) aus einer betätigten Position hin zu der federbelasteten neutralen Position so konfiguriert ist, dass sie durch eine Rückstellfederanordnung (17) und entweder indirekt durch die zweite Magnetspule (62), die auf einen Vorsteuerschieber (52) eines Vorsteuerventils (26) einwirkt, das einen Vorsteuerfluiddruck steuert, der auf das zweite Längsende (60) des Hauptschiebers (50) einwirkt, oder durch die zweite Magnetspule (62) gesteuert wird, die direkt auf das zweite Längsende (60) des Hauptschiebers (50) einwirkt.

14. Hydraulische Ventilanordnung nach einem der vorstehenden Ansprüche 12 bis 13, wobei die Vorsteuerventilanordnung ein separates erstes Vorsteuerventil (25) und ein separates zweites Vorsteuerventil (26) beinhaltet, wobei eine Bewegung des Hauptschiebers (50) in einer ersten Betätigungsrichtung (27) aus der federbelasteten neutralen Position so konfiguriert ist, dass sie durch die erste Magnetspule (61) gesteuert wird, die auf einen Vorsteuerschieber eines ersten Vorsteuerventils (25) einwirkt, das einen Vorsteuerfluiddruck steuert, der auf das erste Längsende (59) des Hauptschiebers (50) einwirkt, und wobei eine Rückstellbewegung des Hauptschiebers (50) in einer zweiten Betätigungsrichtung aus einer betätigten Position hin zu der federbelasteten neutralen Position so konfiguriert ist, dass sie durch eine Rückstellfederanordnung (17) und durch die zweite Magnetspule (62) gesteuert wird, die auf einen Vorsteuerschieber eines zweiten Vorsteuerventils (26) einwirkt, das einen Vorsteuerfluiddruck steuert, der auf das zweite Längsende (60) des Hauptschiebers (50) einwirkt.

15. Hydraulische Ventilanordnung nach einem der vorstehenden Ansprüche 11 bis 14, wobei das hydraulische Wegeventil (10) ferner ein Ventilgehäuse (9) mit zumindest einer ersten Fluidöffnung (P, T), einer zweiten Fluidöffnung (A, B) und einer Bohrung (63) zum Ermöglichen einer Gleitbewegung des Hauptschiebers (50) zwischen zumindest der federbelasteten neutralen Position und einer ersten betätigten Position umfasst, wobei eine Bewegung des Hauptschiebers (50) zwischen der federbelasteten neutralen Position und der ersten betätigten Position einen Strömungsweg steuert, der sich durch das hydraulische Wegeventil (10) zwischen den ersten und den zweiten Fluidöffnungen (P, T, A, B) erstreckt.

## Revendications

1. Procédé pour accélérer le mouvement de retour d'un tiroir principal (50) d'une vanne de commande directionnelle (10) vers une position neutre du tiroir principal (50) sollicitée par un ressort, le procédé comprenant la réduction ou l'arrêt d'une pression de commande ou d'une force de commande agissant sur une première extrémité longitudinale du tiroir principal (50), et l'application sensiblement simultanément d'une contre-pression ou d'une contre-force à court terme agissant sur une seconde extrémité longitudinale (60) du tiroir principal (50) pour fournir un mouvement de retour accéléré du tiroir principal (50) vers la position neutre du tiroir principal (50) sollicitée par un ressort.

2. Procédé selon la revendication 1, dans lequel la contre-pression ou la contre-force agissant sur la seconde extrémité longitudinale (60) du tiroir principal (50) est appliquée sur une période de temps de 2 à 500 millisecondes, spécifiquement de 5 à 100 millisecondes et plus spécifiquement de 5 à 50 millisecondes.

3. Procédé selon la revendication 1 ou 2 pour accélérer le mouvement de retour d'un tiroir principal (50) d'une vanne de commande directionnelle commandée par solénoïde et pilotée (10), ou pour accélérer le mouvement de retour d'un tiroir principal (50) d'une vanne de commande directionnelle commandée par solénoïde (10), le procédé comprenant la commande d'un premier solénoïde (61) pour réduire ou arrêter la pression pilote ou la force agissant sur une première extrémité longitudinale (59) du tiroir principal (50), et la commande d'un second solénoïde (62) pour fournir sensiblement simultanément une augmentation à court terme de la pression pilote ou de la force agissant sur une seconde extrémité longitudinale (60) du tiroir principal (50) pour fournir le mouvement de retour accéléré du tiroir principal (50) vers la position neutre du tiroir principal (50) sollicitée par un ressort.

4. Procédé selon la revendication 3,
dans lequel le mouvement du tiroir principal (50) dans une première direction d'actionnement (27) à partir de la position neutre sollicitée par un ressort est commandé soit indirectement par le premier solénoïde (61) agissant sur un tiroir pilote (51, 89) d'une vanne pilote (25, 88) qui contrôle une pression de fluide pilote qui agit sur la première extrémité longitudinale (59) du tiroir principal (50), ou par le premier solénoïde (61) agissant directement sur la première extrémité longitudinale (59) du tiroir principal (50), et
dans lequel un mouvement de retour du tiroir principal (50) dans une seconde direction d'actionnement depuis une position actionnée vers la position neutre sollicitée par un ressort est commandé en partie par un agencement de ressort de retour (17) et en partie soit indirectement par le second solénoïde (62) agissant sur un tiroir pilote (52, 89) d'une vanne pilote (26, 88) qui contrôle une pression de fluide pilote qui agit sur la seconde extrémité longitudinale (60) du tiroir principal (50) ou par le second solénoïde (62) agissant directement sur la seconde extrémité longitudinale (60) du tiroir principal (50) .

5. Procédé selon l'une quelconque des revendications précédentes 3 et 4, dans lequel l'augmentation à court terme de la pression pilote ou de la force agissant sur une seconde extrémité longitudinale (60) du tiroir principal (50) est assurée en excitant temporairement, ou en augmentant temporairement un niveau d'excitation du second solénoïde (62), sur une période de temps de 2 à 500 millisecondes, spécifiquement de 5 à 100 millisecondes et plus spécifiquement de 5 à 50 millisecondes.

6. Procédé selon l'une quelconque des revendications précédentes 3 à 5, dans lequel l'augmentation à court terme de la pression pilote ou de la force agissant sur une seconde extrémité longitudinale (60) du tiroir principal (50) est assurée en fournissant une impulsion de courant à travers une bobine (56) du second solénoïde (62), dans lequel l'impulsion de courant a un temps de montée compris entre 2 et 250 millisecondes, spécifiquement entre 5 et 75 millisecondes et plus spécifiquement entre 5 et 25 millisecondes.

7. Procédé selon l'une quelconque des revendications précédentes 1 à 6, dans lequel le procédé comprend une étape initiale (S10) :
d'obtention d'instructions pour déplacer le tiroir principal (50) d'une première position actionnée vers une seconde position moins actionnée, en particulier d'une position fortement actionnée vers une position de fonctionnement légèrement actionnée ou vers une position neutre, et en réponse à ces instructions, exécuter ladite étape suivante :
la réduction ou l'arrêt d'une pression de commande ou d'une force de commande agissant sur une première extrémité longitudinale (59) du tiroir principal (50), et l'application sensiblement simultanée d'une contre-pression ou d'une contre-force à court terme agissant sur une seconde extrémité longitudinale (60) du tiroir principal (50) pour fournir un mouvement de retour accéléré du tiroir principal (50) vers la position neutre du tiroir principal (50) sollicitée par un ressort, ou plus spécifiquement
le fait de commander au premier solénoïde (61) de réduire la pression pilote ou la force agissant sur une première extrémité longitudinale (59) du tiroir principal (50), et le fait de commander au second solénoïde (62) de fournir sensiblement simultanément une augmentation à court terme de la pression pilote ou de la force agissant sur une seconde extrémité longitudinale (60) du tiroir principal (50) pour fournir un mouvement de retour accéléré du tiroir principal (50) vers une position neutre du tiroir principal (50) sollicitée par un ressort.

8. Procédé selon l'une quelconque des revendications précédentes 3 à 7, dans lequel le procédé comprend une étape préalable (S5) :
d'obtention d'informations indiquant la position d'actionnement actuelle du tiroir principal (50), et
le fait de commander au second solénoïde (62) de régler le tiroir pilote (52) de la seconde vanne pilote (26) dans un état pré-excité lorsque la position d'actionnement actuelle du tiroir principal (50) correspond à une position fortement actionnée.

9. Procédé selon la revendication 8, dans lequel l'étape de réglage du tiroir pilote (52) de la seconde vanne pilote (26) dans un état pré-excité correspond à l'excitation du second solénoïde (62) pour surmonter toute zone morte initiale, dans lequel l'augmentation de l'excitation n'entraîne pas une augmentation de la pression de commande provenant de la seconde vanne pilote (26).

10. Procédé selon l'une quelconque des revendications précédentes 3 à 9, dans lequel l'étape consistant à commander au second solénoïde (62) de fournir sensiblement simultanément une augmentation à court terme de la pression pilote ou de la force agissant sur une seconde extrémité longitudinale (60) du tiroir principal (50) implique soit :
l'excitation du second solénoïde (62) en utilisant une impulsion de tension ou de courant ayant un niveau de tension ou de courant, une durée et une forme prédéterminés ; ou
la surveillance de la position actuelle du tiroir principal (50) et l'excitation du second solénoïde (62) à l'aide d'un dispositif de commande de rétroaction qui prend au moins en compte la position actuelle du tiroir principal (50).

11. Agencement de vanne hydraulique comprenant :
une vanne de commande directionnelle (10) ayant un tiroir principal (50) ; et
un système de commande électronique (12) configuré pour contrôler le mouvement et/ou la position du tiroir principal (50),
**caractérisé en ce que** :
le système de commande électronique (12) est configuré pour réduire ou
arrêter une pression de commande ou une force de commande agissant sur une première extrémité longitudinale (59) du tiroir principal (50), et appliquer sensiblement simultanément une contre-pression ou une contre-force à court terme agissant sur une seconde extrémité longitudinale (60) du tiroir principal (50) pour fournir un mouvement de retour accéléré du tiroir principal (50) vers la position neutre du tiroir principal (50) sollicitée par un ressort.

12. Agencement de vanne hydraulique selon la revendication 11, dans lequel
la vanne de commande directionnelle hydraulique (10) est une vanne de commande directionnelle hydraulique commandée par pilote (10) qui est connectée à et commandée par un agencement de vanne pilote commandé par solénoïde ayant des premier et second solénoïdes (61, 62) ; ou la vanne de commande directionnelle hydraulique (10) est une vanne de commande directionnelle hydraulique commandée par solénoïde (10) ayant des premier et second solénoïdes à action directe (61, 62),
dans lequel le système de commande électronique (12) est connecté de manière fonctionnelle aux premier et second solénoïdes (61, 62) et configuré pour commander le premier solénoïde (61) afin de réduire la pression pilote ou la force agissant sur une première extrémité longitudinale (59) du tiroir principal (50), et pour commander au second solénoïde (62) de fournir sensiblement simultanément une augmentation à court terme de la pression pilote ou de la force agissant sur une seconde extrémité longitudinale (60) du tiroir principal (50) pour fournir un mouvement de retour accéléré du tiroir principal (50) vers une position neutre du tiroir principal (50) sollicitée par un ressort.

13. Agencement de vanne hydraulique selon la revendication 12, dans lequel le mouvement du tiroir principal (50) dans une première direction d'actionnement (27) à partir de la position neutre sollicitée par un ressort est configuré pour être commandé soit indirectement par le premier solénoïde (61) agissant sur un tiroir pilote (51, 89) d'une vanne pilote (25, 89) qui contrôle une pression de fluide pilote qui agit sur la première extrémité longitudinale (59) du tiroir principal (50), soit par le premier solénoïde (61) agissant directement sur la première extrémité longitudinale (59) du tiroir principal (50), et dans lequel un mouvement de retour du tiroir principal (50) dans une seconde direction d'actionnement (28) depuis une position actionnée vers la position neutre sollicitée par un ressort est configuré pour être commandé par un dispositif à ressort de retour (17) et soit indirectement par le second solénoïde (62) agissant sur un tiroir pilote (52) d'une vanne pilote (26) qui contrôle une pression de fluide pilote qui agit sur la seconde extrémité longitudinale (60) du tiroir principal (50), soit par le second solénoïde (62) agissant directement sur la seconde extrémité longitudinale (60) du tiroir principal (50).

14. Agencement de vanne hydraulique selon l'une quelconque des revendications précédentes 12 ou 13, dans lequel l'agencement de vanne pilote comporte une première vanne pilote séparée (25) et une seconde vanne pilote séparée (26), dans lequel le mouvement du tiroir principal (50) dans une première direction d'actionnement (27) à partir de la position neutre sollicitée par un ressort est configuré pour être commandé par le premier solénoïde (61) agissant sur un tiroir pilote d'une première vanne pilote (25) qui contrôle une pression de fluide pilote qui agit sur la première extrémité longitudinale (59) du tiroir principal (50), et dans lequel un mouvement de retour du tiroir principal (50) dans une seconde direction d'actionnement depuis une position actionnée vers la position neutre sollicitée par un ressort est configuré pour être commandé par un agencement de ressort de retour (17) et par le second solénoïde (62) agissant sur un tiroir pilote d'une seconde vanne pilote (26) qui contrôle une pression de fluide pilote qui agit sur la seconde extrémité longitudinale (60) du tiroir principal (50).

15. Agencement de vanne hydraulique selon l'une quelconque des revendications précédentes 11 à 14, dans lequel la vanne de commande directionnelle (10) comprend en outre un boîtier de vanne (9) avec au moins un premier orifice de fluide (P, T), un second orifice de fluide (A, B) et un alésage (63) pour permettre un mouvement coulissant du tiroir principal (50) entre au moins la position neutre sollicitée par un ressort et une première position actionnée, dans lequel le mouvement du tiroir principal (50) entre la position neutre sollicitée par un ressort et la première position actionnée commande un trajet d'écoulement s'étendant à travers la vanne de commande directionnelle hydraulique (10) entre les premier et second orifices de fluide (P, T, A, B).
